# EUROPEAN PATENT APPLICATION

(11) **EP 4 622 287 A1**
(43) Date of publication of application: **24.09.2025**
(21) Application number: 25159849.6
(22) Date of filing: 25.02.2025
(51) Int. Cl.: H04N 25/531, H04N 25/532, H04N 25/59, H04N 25/616, H04N 25/771

(54) **IMAGE SENSOR AND OPERATING METHOD THEREOF**

(30) Priority: 22.03.2024 KR 20240039956
(71) Applicant: Samsung Electronics Co., Ltd., Suwon-si, Gyeonggi-do 16677 (KR)
(72) Inventor: SEO, Minwoong, 16677 Suwon-si, Gyeonggi-do (KR)
(74) Representative: Kuhnen & Wacker Patent- und Rechtsanwaltsbüro PartG mbB

(57) **Abstract**

An image sensor includes an array of pixels, each of the pixels including: at least one photodiode (PD); and a row driver configured to, in a signal-dump operation of a global shutter mode, control a first capacitor (CP1) to store a pixel voltage corresponding to a first node (N1) and a second capacitor (CP2) to store a reset voltage corresponding to the first node (N1), and in a rolling shutter mode, control any one or any combination of the first capacitor (CP1) and the second capacitor (CP2) to store overflowed charge from the at least one photodiode (PD).

## Description

### BACKGROUND

The present disclosure relates to a complementary metal oxide semiconductor (CMOS) image sensor, and more specifically, to an image sensor capable of operating in a global shutter mode and a rolling shutter mode.

An image sensor is a device that converts optical signals into electrical signals. The image sensor of a rolling shutter method operates with different exposure time sections for each row of a pixel array. In comparison, the image sensor of a global shutter method operates with the same exposure time section for each row of the pixel array.

### SUMMARY

One or more example embodiments provide an image sensor that can selectively operate in either a global shutter method or a rolling shutter method.

According to an aspect of an example embodiment, an image sensor includes: a row driver; at least one photodiode; a floating diffusion region configured to accumulate photocharges generated from the at least one photodiode through a transfer transistor; a reset transistor configured to provide a voltage of a pixel power terminal to the floating diffusion region according to a reset control signal; a source follower transistor configured to output an amplified voltage of the floating diffusion region to a first node based on a voltage of the floating diffusion region; a selection transistor configured to connect the first node and an output line electrically; a second node configured to be electrically connected to the reset transistor; a first capacitor and a second capacitor electrically connected to a path connecting the first node and the second node; and a plurality of transistors, between the first node and the second node, connected to the first capacitor and the second capacitor, respectively, wherein the row driver is configured to, in a signal-dump operation of a global shutter mode, control the plurality of transistors to store to store a pixel voltage corresponding to the first node in the first capacitor, and to store a reset voltage corresponding to the first node in the second capacitor, wherein at least one of the first capacitor and the second capacitor is configured to be a lateral overflow integration capacitor (LOFIC), and, wherein, in a rolling shutter mode, at least one of the first capacitor and the second capacitor is configured to store overflowed charge from the at least one photodiode.

According to another aspect of an example embodiment, an image sensor includes: a row driver; at least one photodiode; a floating diffusion region configured to accumulate photocharges generated from the at least one photodiode through a transfer transistor; a reset transistor configured to provide a voltage of a pixel power terminal to the floating diffusion region according to a reset control signal; a source follower transistor configured to output an amplified voltage of the floating diffusion region to a first node based on a voltage of the floating diffusion region; a selection transistor configured to connect the first node and an output line; and a plurality of capacitors respectively connected to the first node through a plurality of transistors, wherein the row driver is configured to, in a signal-dump operation of a global shutter mode, control the plurality of transistors to store a pixel voltage or a reset voltage transmitted from the floating diffusion region through the source follower transistor and the first node in the plurality of capacitors, wherein at least one of the first capacitor and the second capacitor is configured to be a lateral overflow integration capacitor (LOFIC), and, wherein, in a rolling shutter mode, at least one of the plurality of capacitors is configured to store overflowed charge from the at least one photodiode.

According to another aspect of an example embodiment, a method of operating an image sensor including a plurality of pixels, each of the plurality of pixels including a photodiode and a plurality of transistors, a row driver configured to supply a control signal to the plurality of pixels, a timing controller configured to control driving of the row driver, and a readout circuit configured to output an image signal of the plurality of pixels, is provided. The method includes: storing, according to a global shutter mode control signal, a first pixel voltage output by a source follower transistor corresponding to photocharges generated from the photodiode included in a first pixel of the plurality of pixels commonly exposed to light during a time section, in a first capacitor, and storing a first reset voltage of a floating diffusion region output by the source follower transistor in a second capacitor; outputting, according to the global shutter mode control signal, an output of the source follower transistor, corresponding to the first pixel voltage stored in the first capacitor and the first reset voltage stored in the second capacitor, to a column line in a global shutter readout operation from the plurality of pixels; outputting, according to a rolling shutter mode control signal, a second pixel voltage output by the source follower transistor corresponding to photocharges generated from the photodiode included in the first pixel and a second reset voltage of the floating diffusion region output by the source follower transistor to the column line in a rolling readout operation in which at least a part of the plurality of pixels are exposed to light in different time sections; and selectively providing, according to the rolling shutter mode control signal, capacitance of the first capacitor or the second capacitor in which overflowed charge from the photodiode is stored to the floating diffusion region in a lateral overflow integration method.

### BRIEF DESCRIPTION OF DRAWINGS

The above and other aspects and features will be more apparent from the following description of example embodiments, taken in conjunction with reference to the accompanying drawings.
FIG. 1 is a block diagram exemplarily showing an image sensor according to an example embodiment.
FIG. 2A is a diagram illustrating an operation of a global shutter mode according to an example embodiment.
FIG. 2B is a diagram illustrating an operation of a rolling shutter mode according to an example embodiment.
FIG 3A is a circuit diagram of a pixel of the image sensor according to an example embodiment.
FIG. 3B is a diagram conceptually explaining a signal-dump operation in a global shutter mode according to an example embodiment.
FIG. 3C is a diagram conceptually explaining a readout operation in a global shutter mode according to an example embodiment.
FIG. 3D is a timing diagram explaining the operation in a global shutter mode according to an example embodiment.
FIG. 3E is a diagram conceptually explaining an operation of a rolling shutter mode according to an example embodiment.
FIG. 3F is a timing diagram explaining the operation in a rolling shutter mode according to an example embodiment.
FIG. 4A is a circuit diagram of a pixel of an image sensor according to an example embodiment.
FIG. 4B is a timing diagram explaining an operation in a global shutter mode according to an example embodiment.
FIG. 4C is a timing diagram explaining an operation in a rolling shutter mode according to an example embodiment.
FIG. 4D is a timing diagram explaining an operation in a rolling shutter mode according to an example embodiment.
FIG. 5A is a circuit diagram of a pixel of an image sensor according to an example embodiment.
FIG. 5B is a timing diagram explaining an operation in a global shutter mode according to an example embodiment.
FIG. 5C is a timing diagram explaining an operation in a rolling shutter mode according to an example embodiment.
FIG. 5D is a timing diagram explaining an operation in a rolling shutter mode according to an example embodiment.
FIG. 6A is a circuit diagram of a pixel of an image sensor according to an example embodiment.
FIG. 6B is a timing diagram explaining an operation in a global shutter mode according to an example embodiment.
FIG. 6C is a timing diagram explaining an operation in a rolling shutter mode according to an example embodiment.
FIG. 6D is a timing diagram explaining an operation in a rolling shutter mode according to an example embodiment.
FIG. 7A is a circuit diagram of a pixel of an image sensor according to an example embodiment.
FIG. 7B is a timing diagram explaining an operation in a global shutter mode according to an example embodiment.
FIG. 7C is a timing diagram explaining an operation in a rolling shutter mode according to an example embodiment.
FIG. 8A is a circuit diagram of a pixel of an image sensor according to an example embodiment.
FIG. 8B is a timing diagram explaining an operation in a global shutter mode according to an example embodiment.
FIG. 8C is a timing diagram explaining an operation in a rolling shutter mode according to an example embodiment.
FIG. 9A is a circuit diagram of a pixel of an image sensor according to an example embodiment.
FIG. 9B is a timing diagram explaining an operation in a global shutter mode according to an example embodiment.
FIG. 9C is a timing diagram explaining an operation in a rolling shutter mode according to an example embodiment.
FIG. 10A is a circuit diagram of a pixel of an image sensor according to an example embodiment.
FIG. 10B is a timing diagram explaining an operation in a global shutter mode according to an example embodiment.
FIG. 10C is a timing diagram explaining an operation in a rolling shutter mode according to an example embodiment.
FIG. 11A is a circuit diagram of a pixel of an image sensor according to an example embodiment.
FIG. 11B is a timing diagram explaining an operation in a global shutter mode according to an example embodiment.
FIG. 11C is a timing diagram explaining an operation according to an example embodiment in a rolling shutter mode.
FIG. 11D is a timing diagram explaining an operation according to an example embodiment in a rolling shutter mode.
FIG. 12 is a diagram explaining a pixel group of a pixel array according to an example embodiment.
FIG. 13 is a block diagram of an image sensor according to an example embodiment.
FIG. 14 is a block diagram of an image sensor according to an example embodiment.
FIG. 15 is a block diagram of an image sensor according to an example embodiment.
FIG. 16A is a block diagram of an image sensor according to an example embodiment.
FIGS. 16B and 16C are cross-sectional views of an image sensor according to an example embodiment.
FIG. 17 is a block diagram of an electronic device according to an example embodiment.
FIG. 18 is a block diagram of an application processor according to an example embodiment.
FIG. 19 is a flowchart of a method of operating the image sensor according to an example embodiment.

### DETAILED DESCRIPTION

Hereinafter, example embodiments are described in detail with reference to the accompanying drawings. Like components are denoted by like reference numerals throughout the specification, and repeated descriptions thereof are omitted. It will be understood that when an element or layer is referred to as being "on," "connected to" or "coupled to" another element or layer, it can be directly on, connected or coupled to the other element or layer, or intervening elements or layers may be present. By contrast, when an element is referred to as being "directly on," "directly connected to" or "directly coupled to" another element or layer, there are no intervening elements or layers present. Embodiments described herein are example embodiments, and thus, the present disclosure is not limited thereto, and may be realized in various other forms. Each embodiment provided in the following description is not excluded from being associated with one or more features of another example or another embodiment also provided herein or not provided herein but consistent with the present disclosure.

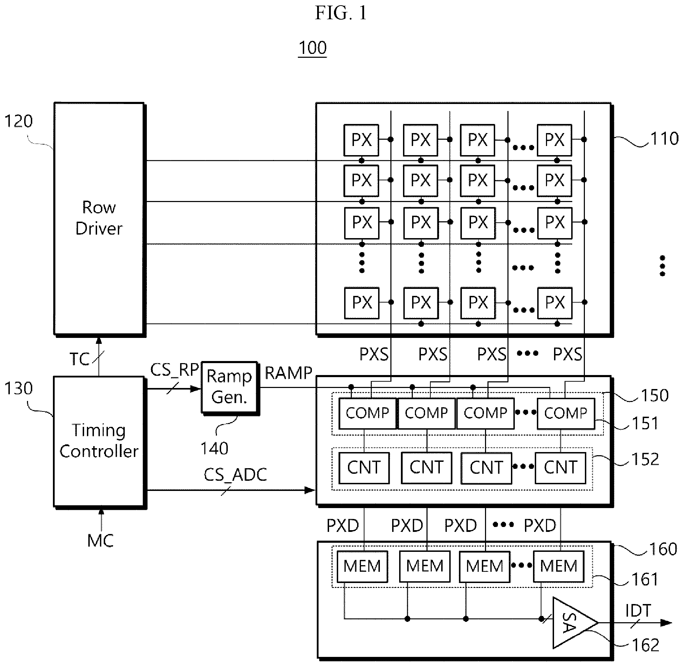

FIG. 1 is a block diagram illustrating an image sensor 100 according to an example embodiment.

The image sensor 100 according to an example embodiment may operate in either a global shutter mode or a rolling shutter mode based on a mode control signal MC. The image sensor 100 may perform both a signal-dump operation and a rolling readout operation using one of a source follower transistor based on a feedback structure in the global shutter mode. In addition, the image sensor 100 may configure a capacitor that stores a pixel voltage or a reset voltage in the global shutter mode as a lateral overflow integration capacitor (LOFIC). In an example embodiment, the image sensor 100 may selectively provide capacitance of the capacitor to the floating diffusion region in the readout operation of the rolling shutter mode. In the present specification, the pixel voltage refers to a voltage output to a column line in response to photocharge generated from a photodiode.

Referring to FIG. 1, the image sensor 100 will be described in detail. FIG. 1 exemplarily shows the image sensor 100 that outputs a pixel signal PXS in parallel for each column line, but example embodiments are not limited thereto and may be implemented as the image sensor that outputs the pixel signal in parallel for each pixel.

The image sensor 100 may generate image data which is visual information of an object captured through a lens, and an image signal processor may be implemented to process the image data generated by the image sensor 100 and output it to a display device or store it on a storage device.

The image sensor 100 may include a pixel array 110, a row driver 120, a timing controller 130, a ramp signal generator 140, an analog-digital converter (ADC) 150, and an output buffer 160.

The pixel array 110 may include a plurality of pixels PXs. The pixel array 110 may receive a plurality of pixel driving signals CSn, such as a selection signal for controlling a selection transistor, a reset signal for controlling a reset transistor, and a transfer transistor control signal for controlling a transfer transistor, from the row driver 120. Each of the plurality of pixels PXs of the pixel array 110 may operate under the control of the received pixel driving signals CSn.

The plurality of pixels PXs may be arranged, for example, in a matrix form. Each pixel PX may be electrically connected to any one of a row line and any one of a column line among a plurality of row lines and a plurality of column lines. In an example embodiment, each pixel PX may include a plurality of transistors controlled by the row driver 120. In an example embodiment, two or more pixels PXs adjacent to each other may configure one pixel group, and two or more pixels PXs included in the pixel group may share at least some of a transfer transistor, a driving transistor, a selection transistor, and a reset transistor with each other.

Each of the plurality of pixels PXs may include a photoelectric conversion element that converts an incident light signal into an electrical signal. Each pixel PX may include at least one of the photoelectric conversion element.

The photoelectric conversion element may be a photodiode PD. The photoelectric conversion element may be one of a photodiode PD, a photocapacitor, a photogate, a pinned photodiode PPD, a partially pinned photodiode, an organic photodiode (OPD) and a quantum dot (QD) or a combination thereof. Example embodiments will be described on the premise that the photoelectric conversion element is a photodiode PD, but other photoelectric conversion elements described above may be used and the photoelectric conversion element is not limited to the photodiode PD.

The row driver 120 may drive any one of the row or a plurality of rows of the pixel array 110 under the control of the timing controller 130. That is, the row driver 120 may drive at least one row among the plurality of rows. The row driver 120 may generate a selection signal to drive at least one row among the plurality of rows. The row driver 120 may activate the pixels corresponding to the selected row. Pixel signals PXS of the pixels of the selected row may be transmitted to the ADC 150 through a plurality of column lines CLm.

The pixel signal PXS may include a reset voltage signal and a pixel voltage signal. The pixel voltage signal may be a voltage of a floating diffusion region that reflects charge generated from photodiodes PD included in each of the plurality of pixels. The reset voltage signal may be a voltage of the floating diffusion region used as a reference voltage for performing correlated double sampling (CDS) with the pixel voltage signal.

The timing controller 130 may control the pixel array 110, the row driver 120, the ramp signal generator 140, and the ADC 150. The timing controller 130 may provide a timing control signal TC to the row driver 120.

The timing control signal TC according to an example embodiment may be set differently based on the mode control signal MC. For example, the mode control signal MC is a signal based on a shooting mode selected by a user, and the shooting mode may include a still image mode, a video mode, etc. The mode control signal MC may be a signal that controls the image sensor 100 to operate in the global shutter mode or the rolling shutter mode. In an example embodiment, the mode control signal MC may be provided from an image signal processor.

The row driver 120 may drive each of the plurality of pixels PXs in the global shutter method or the rolling shutter method based on the timing control signal TC. The row driver 120 may output the pixel signal PXS for each of the plurality of pixels PXs in both the global shutter method and the rolling shutter method using a signal that controls the source follower transistor. Each of the plurality of pixels PXs may include one of the source follower transistor. That is, one and the same source follower transistor may be used to output the pixel signal PXS in both the global shutter method and the rolling shutter method.

In an example embodiment, when the row driver 120 drives each of the plurality of pixels PXs in the rolling shutter method, the row driver 120 may operate the pixel PX to provide a plurality of conversion gain modes. In this case, the row driver 120 may selectively electrically connect the lateral overflow integration capacitor (LOFIC) to the floating diffusion region so that the pixel PX may generate a pixel voltage signal by applying a high conversion gain (HCG) to the pixel voltage, or the pixel voltage signal by applying a low conversion gain (LCG) to the pixel voltage. The lateral overflow integration capacitor (LOFIC) used for the plurality of conversion gain modes in the rolling shutter mode may be a capacitor that stores the pixel voltage or a capacitor that stores a reset voltage in the signal-dump operation of the global shutter mode.

The timing controller 130 may control the ramp signal generator 140 through a ramp control signal CS_RP and control the ADC 150 through a ADC control signal CS_ADC. The ramp control signal CS_RP may include a ramp enable signal, a mode signal, etc.

The ramp signal generator 140 may generate a ramp signal RAMP in response to the ramp control signal CS_RP. The ramp signal generator 140 may generate the ramp signal RAMP having a preset slope. The ramp signal generator 140 may provide the generated ramp signal RAMP to the ADC 150.

The ADC 150 may, based on the ramp signal RAMP, convert the reset voltage signal and the pixel voltage signal of the pixel signal PXS into pixel data PXD which is a digital signal and output the converted pixel data PXD. For example, the ADC 150 may convert each of the reset voltage signal and the pixel voltage signal into the digital signal based on the ramp signal RAMP using a correlated double sampling method, and output the difference between the reset voltage signal and the pixel voltage signal into the pixel data PXD which is the digital signal.

The ADC 150 may include a comparator 151 and a counter circuit 152. The pixel signal PXS and the ramp signal RAMP may be provided to the comparator 151. The counter circuit 152 may count a clock signal corresponding to a level of the reset voltage signal and a level of the pixel voltage signal. The counter circuit 152 may generate the difference between the level of the reset voltage signal and the level of the pixel voltage signal as pixel data PXD which is a digital signal.

The output buffer 160 may include a plurality of column memory blocks 161 corresponding to each column to store the pixel signal PXD. The output buffer 160 may include a sense amplifier SA for amplifying the pixel signal PXD stored in the column memory block 161. The sense amplifier SA may output the amplified pixel signal PXD as image data IDT.

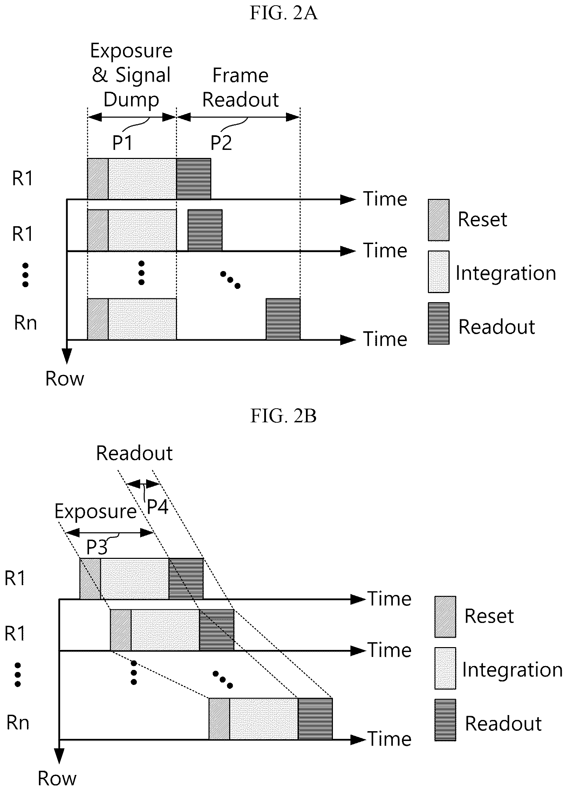

FIG. 2A is a diagram illustrating the operation of the global shutter mode of the image sensor 100 of FIG. 1. FIG. 2B is a diagram illustrating the operation of the rolling shutter mode of the image sensor 100 of FIG. 1.

Referring to FIGS. 1 and 2A, when the image sensor 100 operates in the global shutter mode, each pixel PX may be controlled so that photocharge integration time P1 of the photodiode is to be located in the same time section for all pixels of the pixel array 110. The integration time may refer to the time during which the photodiode actually integrates the photocharge. The image sensor 100 may perform a signal-dump operation in the photocharge integration time P1. In the global shutter mode, the image sensor 100 may perform a rolling readout operation. That is, the image sensor 100 may control each pixel PX so that the time section in which a readout is performed after the integration time is different for each row of the pixel array. Alternatively, the time section in which the readout is performed may be different for rows of a certain group. In this case, the readout for the pixels of the same group may be performed in the same time section. The time required to readout all pixels PXs of the pixel array 110 corresponding to any one frame of an image signal may be a frame readout time P2.

Referring to FIGS. 1 and 2B, when the image sensor 100 operates in the rolling shutter mode, the image sensor 100 may control each pixel PX so that the time section in which the photocharge integration time P3 of the photodiode is located is different for each row of the pixel array. Depending on example embodiments, the time section during which an integration is performed may be different for each of all rows. Alternatively, the time section during which the integration is performed may be different for rows of a certain group. In this case, the integration of photocharge for pixels of the same group may be performed in the same time section. In the rolling shutter mode, the image sensor 100 may perform the rolling readout operation. That is, the image sensor 100 may control each pixel PX so that the time section P4 in which the readout is performed after the integration time is different for each row of the pixel array. Alternatively, the time section in which the readout is performed may be different for rows of a certain group. In this case, the readout for the pixels of the same group may be performed in the same time section.

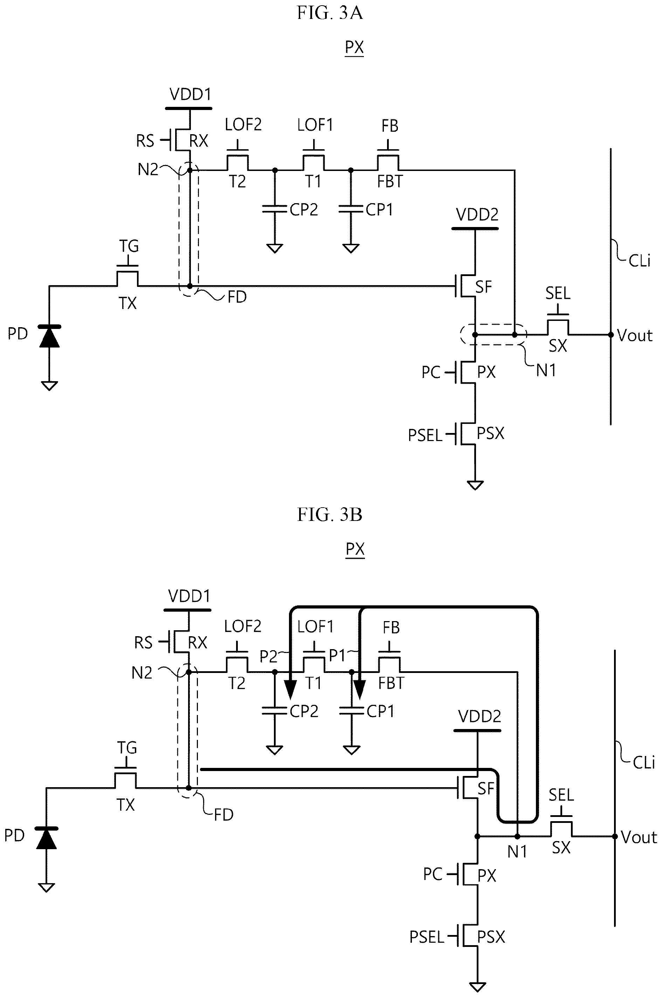

FIG 3A is a circuit diagram of a pixel of an image sensor according to an example embodiment. The pixel PX of FIG. 3A may correspond to the pixel PX of the image sensor 100 of FIG. 1.

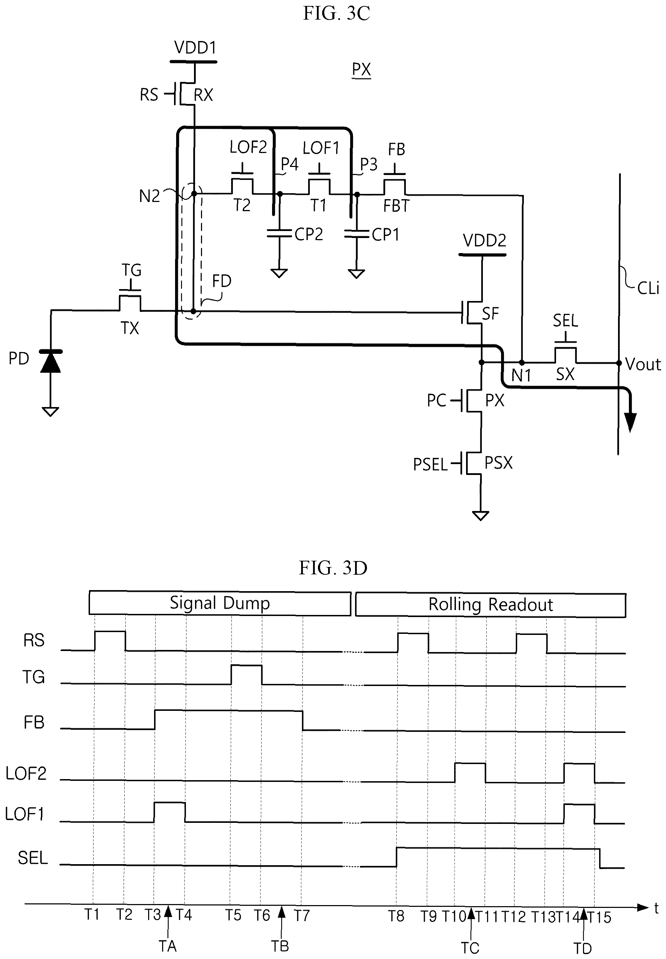

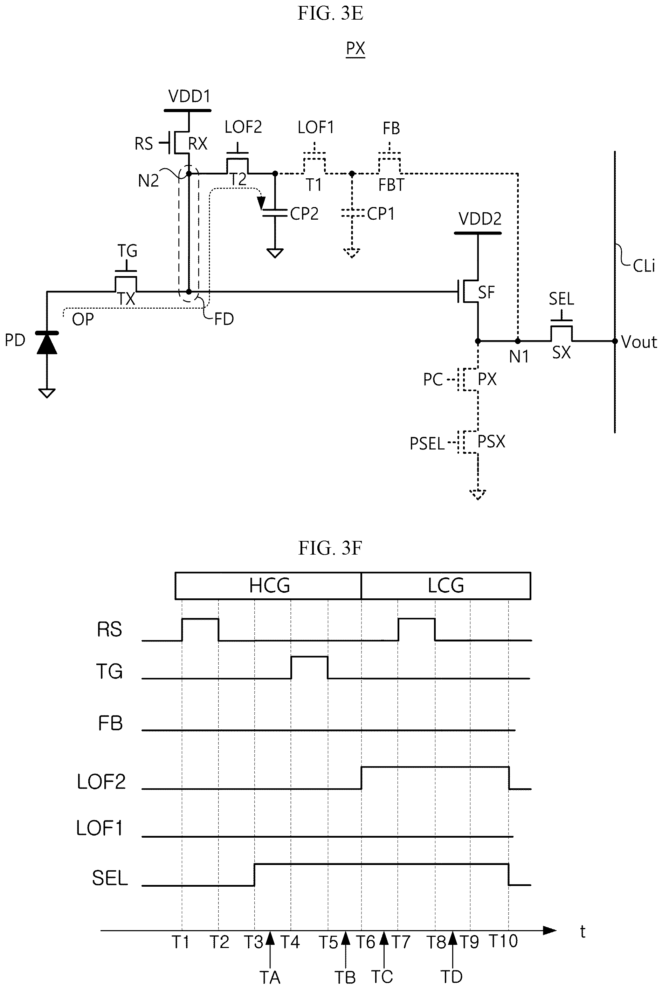

FIG. 3B is a diagram conceptually explaining the signal-dump operation in a global shutter mode of the pixel PX according to an example embodiment, and FIG. 3C is a diagram conceptually explaining the readout operation in the global shutter mode of the pixel PX. FIG. 3D is a timing diagram explaining the operation of the pixel PX in global shutter mode. FIG. 3E is a diagram conceptually explaining the operation of the rolling shutter mode of the pixel PX, and FIG. 3F is a timing diagram explaining the operation of the pixel PX in the rolling shutter mode.

Referring to FIG. 3A, the pixel PX according to an example embodiment may include a photodiode PD, a transfer transistor TX, a reset transistor RX, a source follower transistor SF, a selection transistor SX, a precharge transistor PX, a precharge selection transistor PSX, a feedback transistor FBT, a first transistor T1, a second transistor T2, a first capacitor CP1, and a second capacitor CP2.

The transfer transistor TX may connect the photodiode PD and a floating diffusion region FD, and may be controlled by a transfer control signal TG.

The reset transistor RX may connect a first pixel voltage power VDD1 and the floating diffusion region FD, and may be controlled by a reset control signal RS. One terminal of the reset transistor RX may be connected to the first pixel voltage power VDD1, and the other terminal may be connected to a second node N2. The second node N2 may be included in the floating diffusion region FD. Therefore, the potential of the second node N2 may be the same as the potential of the floating diffusion region FD.

The pixel PX according to an example embodiment may precharge the floating diffusion region FD using the reset transistor RX in the rolling readout operation of the global shutter mode. That is, a separate transistor may not be included for precharging the floating diffusion region FD. The source follower transistor SF may be referred to as a driving transistor and may be controlled by the voltage of the floating diffusion region FD. The source follower transistor SF may connect the first node N1 and the second pixel voltage power VDD2. The second pixel voltage power VDD2 may provide the same voltage as or different voltage from the first pixel voltage power VDD1.

The feedback transistor FBT, the first transistor T1, and the second transistor T2 may be disposed to be connected in series with each other between the first node N1 and the second node N2. When the feedback transistor FBT, the first transistor T1, and the second transistor T2 are sequentially disposed in series with each other, one terminal of the feedback transistor FBT may be connected to the first node N1, and the other terminal may be connected to one terminal of the first transistor T1 and one terminal of the first capacitor CP1. One terminal of the first transistor T1 may be connected to the other terminal of the feedback transistor FBT, and the other terminal of the first transistor T1 may be connected to one terminal of the second transistor T2 and one terminal of the second capacitor CP2. One terminal of the second transistor T2 may be connected to the other terminal of the first transistor T1, and the other terminal of the second transistor T2 may be connected to the second node N2.

The precharge transistor PX and a precharge selection transistor PSX may be connected in series between the first node N1 and ground. The precharge transistor PX may connect the first node N1 and the precharge selection transistor PSX, and may be controlled by a precharge signal PC. The precharge selection transistor PSX may connect the precharge transistor PX and the ground, and may be controlled by a precharge selection signal PSEL.

The selection transistor SX may connect the first node N1 and a column line CLi, and may be controlled by a selection signal SEL.

The pixel PX according to an example embodiment may perform the signal-dump operation and the rolling readout operation in the global shutter mode using the source follower transistor SF. In addition, the second capacitor CP2 may be configured as the lateral overflow integration capacitor (LOFIC). That is, when the image sensor 100 operates in the rolling shutter mode, overflowed charges from the photodiode PD during the integration time may be stored in the second capacitor CP2. When the image sensor 100 operates in the global shutter mode, the reset control signal RS may have a high-level at the integration time, and the overflowed charges from the photodiode PD may not be stored in the second capacitor CP2.

Referring to FIG. 3B, the pixel PX may perform the signal-dump operation in the global shutter mode. The pixel voltage of the floating diffusion region FD may be amplified in the source follower transistor SF and stored in the first capacitor CP1, and the reset voltage of the floating diffusion region FD may be amplified in the source follower transistor SF and stored in the second capacitor CP2. Alternatively, the reset voltage may be stored in the first capacitor CP1 and the pixel voltage may be stored in the second capacitor CP2. In this case, the selection transistor SX may be turned off.

In the global shutter mode, the precharge transistor PX may be controlled by a precharge signal PS so that a constant and small amount of current may flow in the precharge transistor PX, and the precharge selection transistor PSX may be turned on by a high-level precharge selection signal PSEL. In this case, the precharge transistor PX may operate in a saturation region, and the precharge selection transistor PSX may operate in a linear region. When pixels in other example embodiments described below operate in the global shutter mode, the precharge transistor PX and the precharge selection transistor PSX may operate similarly thereto.

Referring to FIG. 3C, the pixel PX may perform the rolling readout operation in the global shutter mode. The charge corresponding to the pixel voltage stored in the first capacitor CP1 may move to the floating diffusion region FD. The pixel voltage of the floating diffusion region FD may be amplified by the source follower transistor SF and output to the column line CLi through the selection transistor SX. The charge corresponding to the reset voltage stored in the second capacitor CP2 may move to the floating diffusion region FD. The reset voltage of the floating diffusion region FD may be amplified by the source follower transistor SF and output to the column line CLi through the selection transistor SX. The source follower transistor SF that performs amplification of the pixel voltage and reset voltage in the rolling readout operation may be the same as the source follower transistor SF that performs amplification of the pixel voltage and reset voltage in the signal-dump operation. That is, the pixel voltage and reset voltage of the signal-dump operation may be fed back to the floating diffusion region FD in the rolling readout operation. Therefore, the pixel PX may not require a separate sample-hold circuit exclusively used for the global shutter mode, and the pixel PX may operate in the global shutter mode using a small number of transistors.

FIG. 3D is a timing diagram explaining the operation of the pixel PX in the global shutter mode.

For the signal-dump operation, at time T1, the reset control signal RS may transition to the high-level and the floating diffusion region FD may be reset.

At time T2, the source follower transistor SF may output a reset voltage to the first node N1 corresponding to the voltage of the floating diffusion region FD.

At time T3, a feedback control signal FB may transition to the high-level, and the feedback control signal FB may maintain the high-level while the pixel voltage and reset voltage are stored in each of the first capacitor CP1 and the second capacitor CP2. At time T3, a first control signal LOF1 may transition to the high-level and the first transistor T1 may be turned on, and at time TA, the reset voltage may be stored in the second capacitor CP2. At time T4, the first control signal LOF1 may transition to a low-level, and the first transistor T1 may be turned off.

At time T5, the transfer control signal TG may transition to a high-level, and the charge of the photodiode PD may move to the floating diffusion region FD. The source follower transistor SF may output the pixel voltage to the first node N1 corresponding to the voltage of the floating diffusion region FD.

At time TB, the pixel voltage of the first node N1 may be stored in the first capacitor CP1.

For the rolling readout operation, at time T8, the reset control signal RS may transition to the high-level and the floating diffusion region FD may be reset (precharged). The selection control signal SEL may be maintained at the high-level during the rolling readout operation of the pixel voltage and the reset voltage, and the selection transistor SX may be turned on.

At time T10, the second control signal LOF2 may transition to the high-level, the second transistor T2 may be turned on, and the charge stored in the second capacitor CP2 may move to the floating diffusion region FD. At time TC, the reset voltage of the floating diffusion region FD may be amplified by the source follower transistor SF and output to the column line CLi through the selection transistor SX.

At time T12, the reset control signal RS may transition to a high-level again and the floating diffusion region FD may be reset (precharged).

At time T14, the first control signal LOF1 and the second control signal LOF2 may transition to the high-level, the first transistor T1 and the second transistor T2 may be turned on, and the charge stored in the first capacitor CP1 may move to the floating diffusion region FD. At time TD, the pixel voltage of the floating diffusion region FD may be amplified by the source follower transistor SF and output to the column line CLi through the selection transistor SX.

FIG. 3E is a diagram conceptually explaining the operation of the rolling shutter mode of the pixel PX.

In the rolling shutter mode, the precharge selection signal PSEL, the feedback control signal FB, and the first control signal LOF1 may be maintained at the low-level, and the precharge selection transistor PSX, the feedback transistor FBT, and the first transistor T1 may be turned off.

The photocharge may be integrated in the photodiode PD during the integration time. When illumination is high, the overflowed photocharge from the photodiode PD may move to the second capacitor CP2 configured as the lateral overflow integration capacitor (LOFIC). In an example embodiment, a separate path through which the overflowed photocharge move may be provided between the second capacitor CP2 and the photodiode PD, or the overflowed photocharge from the photodiode PD may move to the second capacitor CP2 by adjusting a potential barrier of the second transistor T2.

Depending on example embodiments, the first capacitor CP1 may also be configured as the lateral overflow integration capacitor (LOFIC). In this case, the capacitance of the first capacitor CP1 and the capacitance of the second capacitor CP2 may be configured differently. Therefore, the first capacitor CP1 and the second capacitor CP2 may operate as a two-step lateral overflow integration capacitor (LOFICs). That is, the overflowed photocharge from the second capacitor CP2 may move back to the first capacitor CP1. The example described with reference to FIGS. 3E and 3F will be described assuming that the first transistor T1 is turned off and only the second capacitor CP2 is configured as the lateral overflow integration capacitor (LOFIC), but example embodiments are not limited to thereto.

FIG. 3F is a timing diagram explaining the operation of the pixel PX in the rolling shutter mode.

Referring to FIG. 3F, the pixel PX according to an example embodiment may provide a high conversion gain (HCG) mode and a low conversion gain (LCG) mode.

At time T1, the reset control signal RS may transition to the high-level, the reset transistor RX may be turned on, and the floating diffusion region FD may be reset. In this case, the second transistor T2 is in a turn-off state.

At time T3, the selection transistor SX may be turned on by the high-level selection control signal SEL, and at time TA, the reset voltage of the HCG mode corresponding to the voltage of the floating diffusion region FD may be sampled.

At time T4, the transfer transistor TX may be turned on by the high-level transfer control signal TG, and the photocharges of the photodiode PD may move to the floating diffusion region FD. At time TB, the pixel voltage of the HCG mode corresponding to the voltage of the floating diffusion region FD may be sampled.

At time T6, the second transistor T2 connecting the second node N2 and the second capacitor CP2 configured as the lateral overflow integration capacitor (LOFIC) may be turned on by the high-level second control signal LOF2, and the second capacitor CP2 may be electrically coupled to the floating diffusion region FD. At time TC, the pixel voltage of the LCG mode may be sampled from the floating diffusion region FD to which the second capacitor CP2 is electrically coupled.

At time T7, the reset transistor RX may be turned on by the high-level reset control signal RS, and the floating diffusion region FD to which the second capacitor CP2 is electrically coupled may be reset. At time TD, the reset voltage of the LCG mode may be sampled from the floating diffusion region FD to which the second capacitor CP2 may be electrically coupled.

The pixel PX according to example embodiments can store the overflowed photocharge from the photodiode PD in the rolling shutter mode because at least one of the capacitors CP1 and CP2 which store the pixel voltage and/or the reset voltage in the global shutter mode, may be configured as the lateral overflow integration capacitor (LOFIC). In addition, because in the rolling shutter mode, the at least one of the capacitors CP1 and CP2 may selectively provide capacitance to the floating diffusion region FD, the pixel PX may provide a plurality of conversion gain modes. For example, which of the capacitors CP1 and CP2 connected to the floating diffusion FD may depend on a conversion gain mode. Therefore, high quality images may be generated.

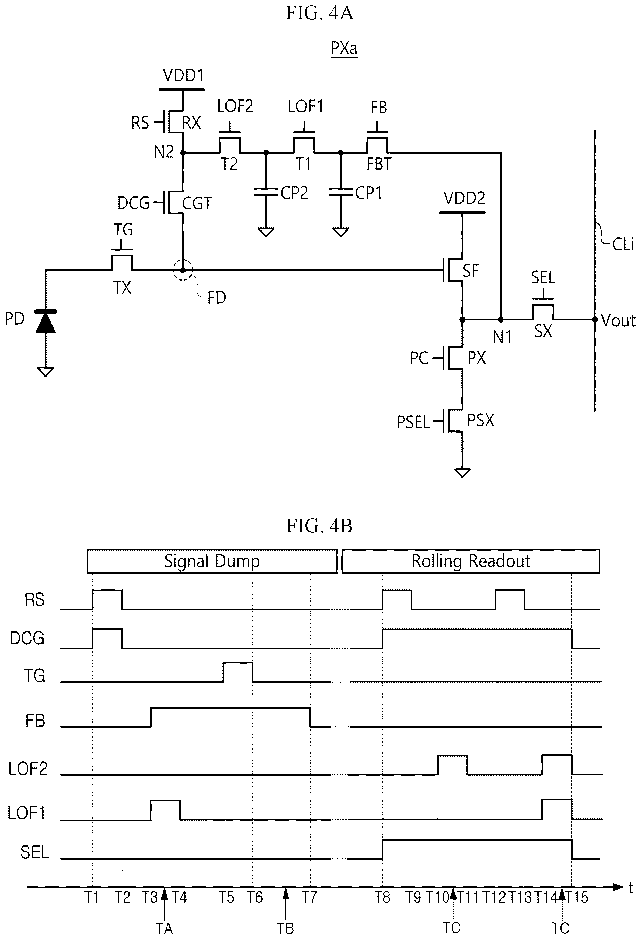

FIG. 4A is a circuit diagram of a pixel of an image sensor according to an example embodiment. A pixel PXa of FIG. 4A may correspond to the pixel PX of the image sensor 100 of FIG. 1. Referring to FIGS. 3A to 3F, detailed descriptions for overlapping or similar parts will be omitted.

Referring to FIG. 4A, a pixel PXa according to an example embodiment, unlike the pixel PX described with reference to FIG. 3A, may include a conversion gain transistor CGT connecting the second node N2 and the floating diffusion region FD. The second node N2 may be selectively electrically coupled to the floating diffusion region FD by turning on or off the conversion gain transistor CGT. The second capacitor CP2 may be electrically coupled to the floating diffusion region FD by turning on or off the second transistor T2 and the conversion gain transistor CGT.

In an example embodiment, the second capacitor CP2 may be configured as the lateral overflow integration capacitor (LOFIC). Depending on example embodiments, the first capacitor CP1 may also be configured as the lateral overflow integration capacitor (LOFIC).

The pixel PXa may precharge the floating diffusion region FD using the reset transistor RX and the conversion gain transistor CGT in the rolling readout operation of the global shutter mode. That is, a separate transistor may not be included for precharging the floating diffusion region FD.

FIG. 4B is a timing diagram explaining the operation of the pixel PXa in global shutter mode.

For the signal-dump operation, at time T1, the reset control signal RS and the conversion gain control signal DCG may transition to the high-level, the reset transistor RX and the conversion gain transistor CGT may be turned on, and the floating diffusion region FD may be reset.

At time T2, the source follower transistor SF may output the reset voltage to the first node N1 corresponding to the voltage of the floating diffusion region FD.

At time T3, the feedback control signal FB may transition to the high-level, and the feedback control signal FB may maintain the high-level while the pixel voltage and reset voltage are stored in the first capacitor CP1 and the second capacitor CP2 each. At time T3, the first control signal LOF1 may transition to the high-level, and the first transistor T1 may be turned on. At time TA, the reset voltage of the first node N1 may be stored in the second capacitor CP2. At time T4, the first control signal LOF1 may transition to the low-level, and the first transistor T1 may be turned off.

At time T5, the transfer control signal TG may transition to the high-level, and the charge of the photodiode PD may move to the floating diffusion region FD. The source follower transistor SF may output the pixel voltage to the first node N1 corresponding to the voltage of the floating diffusion region FD.

At time TB, the pixel voltage of the first node N1 may be stored in the first capacitor CP1.

For the rolling readout operation, at time T8, the reset control signal RS and the conversion gain control signal DCG may transition to the high-level, the reset transistor RX and the conversion gain transistor CGT may be turned on, and the floating diffusion region FD may be precharged. The selection control signal SEL and the conversion gain control signal DCG may be maintained at the high-level during the rolling readout operation of the pixel voltage and the reset voltage, and the selection transistor SX and the conversion gain transistor CGT may be maintained in a turn-on state.

At time T10, the second control signal LOF2 may transition to the high-level, the second transistor T2 may be turned on, and the charge stored in the second capacitor CP2 may move to the floating diffusion region FD. At time TC, the reset voltage of the floating diffusion region FD may be amplified by the source follower transistor SF and output to the column line CLi through the selection transistor SX.

At time T12, the reset control signal RS may transition to the high-level again and the floating diffusion region FD may be precharged. At time T13, the reset transistor RX may be turned off.

At time T14, the first control signal LOF1 and the second control signal LOF2 may transition to the high-level, the first transistor T1 and the second transistor T2 may be turned on, and the charge stored in the first capacitor CP1 may move to the floating diffusion region FD. At time TD, the pixel voltage of the floating diffusion region FD may be amplified by the source follower transistor SF and output to the column line CLi through the selection transistor SX.

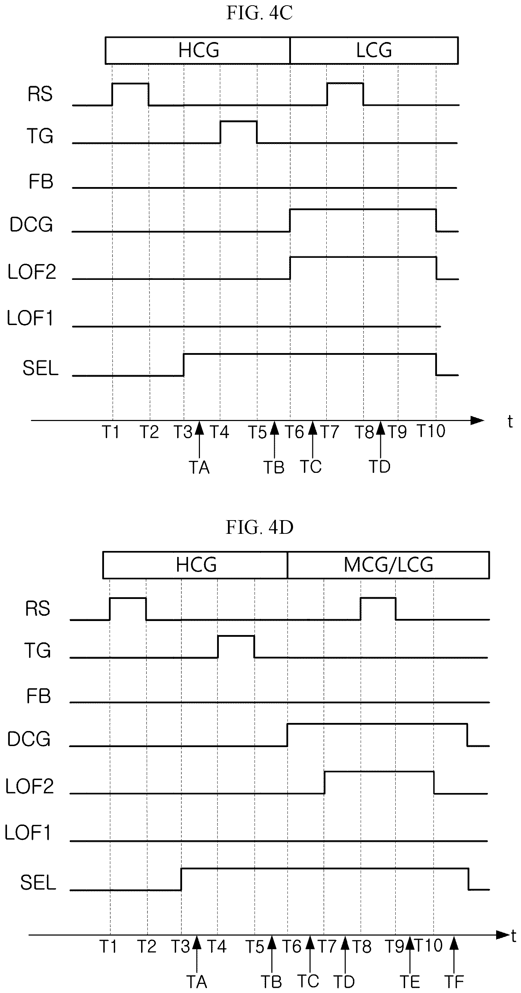

FIG. 4C is a timing diagram explaining the operation of the pixel PXa in the rolling shutter mode according to an example embodiment.

Referring to FIG. 4C, the pixel PXa according to example embodiments may provide the high conversion gain (HCG) mode and the low conversion gain (LCG) mode.

In the pixel PXa according to example embodiments, unlike the operation of the pixel PX described with reference to FIG. 3F, the conversion gain transistor CGT may maintain a turn-off state in the HCG mode and a turn-on state in the LCG mode. Therefore, in the HCG mode, the second node N2 may be separated from the floating diffusion region FD, thereby improving the image quality generated from the image sensor 100.

At time T1, the reset control signal RS may transition to the high-level, the reset transistor RX may be turned on, and the floating diffusion region FD may be reset. In this case, the second transistor T2 is in a turn-off state.

At time T3, the selection transistor SX may be turned on by the high-level selection control signal SEL, and at time TA, the reset voltage of the HCG mode corresponding to the voltage of the floating diffusion region FD may be sampled.

At time T4, the transfer transistor TX may be turned on by the high-level transfer control signal TG, and the photocharge of the photodiode PD may move to the floating diffusion region FD. At time TB, the pixel voltage of the HCG mode corresponding to the voltage of the floating diffusion region FD may be sampled.

At time T6, the second transistor T2 connecting the second node N2 and the second capacitor CP2 configured as the lateral overflow integration capacitor (LOFIC) may be turned on by the high-level second control signal LOF2. The conversion gain transistor CGT connecting the second node N2 and the floating diffusion region FD may be turned on by the high-level conversion gain control signal DCG. The second transistor T2 and the conversion gain transistor CGT may be maintained in a turn-on state in the LCG mode. The second capacitor CP2 may be electrically coupled to the floating diffusion region FD. At time TC, the pixel voltage of the LCG mode may be sampled from the floating diffusion region FD to which the second capacitor CP2 is electrically coupled.

At time T7, the reset transistor RX may be turned on by the high-level reset control signal RS, and the floating diffusion region FD to which the second capacitor CP2 is electrically coupled may be reset. At time TD, the reset voltage of the LCG mode may be sampled from the floating diffusion region FD to which the second capacitor CP2 may be electrically coupled.

FIG. 4D is a timing diagram explaining the operation of the pixel PXa in the rolling shutter mode according to an example embodiment.

Referring to FIG. 4D, the pixel PXa according to example embodiments may provide the high conversion gain (HCG) mode, a middle conversion gain (MCG) mode, and the low conversion gain (LCG) mode. That is, the pixel PXa according to example embodiments, unlike the operation of the pixel PXa described with reference to FIG. 4C, can reduce a large conversion gain drop when being converted from the HCG mode to the LCG mode by providing the MCG mode. In addition, in the HCG mode, the second node N2 may be separated from the floating diffusion region FD, thereby improving the image quality generated from the image sensor 100.

Focus will be on describing parts that are different from the operation of the pixel PXa described with reference to FIG. 4C. Referring to FIG. 4D, the pixel PXa may perform the readout operation by the MCG/LCG mode in the rolling shutter mode.

At time T6, the conversion gain transistor CGT connecting the second node N2 and the floating diffusion region FD may be turned on by the high-level conversion gain control signal DCG. The conversion gain transistor CGT may be maintained in a turn-on state in MCG/LCG mode. The second node N2 may be electrically coupled to the floating diffusion region FD. That is, parasitic capacitance by the junction of the second node N2 may be provided to the floating diffusion region FD. At time TC, the pixel voltage of the MCG mode may be sampled from the floating diffusion region FD to which the second node N2 is electrically coupled.

At time T7, the second transistor T2 connecting the second node N2 and the second capacitor CP2 configured as the lateral overflow integration capacitor (LOFIC) may be turned on by the high-level second control signal LOF2. The capacitance of the second capacitor CP2 may be additionally provided to the floating diffusion region FD. At time TD, the pixel voltage of the LCG mode may be sampled from the floating diffusion region FD to which the second node N2 and the second capacitor CP2 is electrically coupled.

At time T8, the reset transistor RX may be turned on by the high-level reset control signal RS, and the floating diffusion region FD to which the second capacitor CP2 and the second node N2 is electrically coupled may be reset. At time TE, the reset voltage of the LCG mode may be sampled from the floating diffusion region FD to which the second capacitor CP2 and the second node N2 may be electrically coupled.

At time T10, the second transistor T2 may be turned off by the low-level second control signal LOF2. At time TF, the reset voltage of the MCG mode may be sampled from the floating diffusion region FD to which the second node N2 is electrically coupled.

At time T1, the reset control signal RS may transition to the high-level, the reset transistor RX may be turned on, and the floating diffusion region FD may be reset. In this case, the second transistor T2 is in a turn-off state.

At time T3, the selection transistor SX may be turned on by the high-level selection control signal SEL, and at time TA, the reset voltage of the HCG mode corresponding to the voltage of the floating diffusion region FD may be sampled.

At time T4, the transfer transistor TX may be turned on by the high-level transfer control signal TG, and the photocharge of the photodiode PD may move to the floating diffusion region FD. At time TB, the pixel voltage of the HCG mode corresponding to the voltage of the floating diffusion region FD may be sampled.

At time T6, the second transistor T2 connecting the second node N2 and the second capacitor CP2 configured as the lateral overflow integration capacitor (LOFIC) may be turned on by the high-level second control signal LOF2. The conversion gain transistor CGT connecting the second node N2 and the floating diffusion region FD may be turned on by the high-level conversion gain control signal DCG. The second transistor T2 and the conversion gain transistor CGT may be maintained in a turn-on state in the LCG mode. The second capacitor CP2 may be electrically coupled to the floating diffusion region FD. At time TC, the pixel voltage of the LCG mode may be sampled from the floating diffusion region FD to which the second capacitor CP2 is electrically coupled.

At time T7, the reset transistor RX may be turned on by the high-level reset control signal RS, and the floating diffusion region FD to which the second capacitor CP2 is electrically coupled may be reset. At time TD, the reset voltage of the LCG mode may be sampled from the floating diffusion region FD to which the second capacitor CP2 may be electrically coupled.

The pixel PXa according to example embodiments can store the overflowed photocharge from the photodiode PD in the rolling shutter mode because at least one of the capacitors CP1 and CP2 which store the pixel voltage and/or the reset voltage in the global shutter mode, may be configured as the lateral overflow integration capacitor (LOFIC). In addition, because in the rolling shutter mode, the at least one of the capacitors CP1 and CP2 may selectively provide capacitance to the floating diffusion region FD, the pixel PX may provide a plurality of conversion gain modes. In addition, a greater number of conversion gain modes may be provided by separating the second node N2 and the floating diffusion region FD by the conversion gain transistor CGT. Therefore, high quality images may be generated.

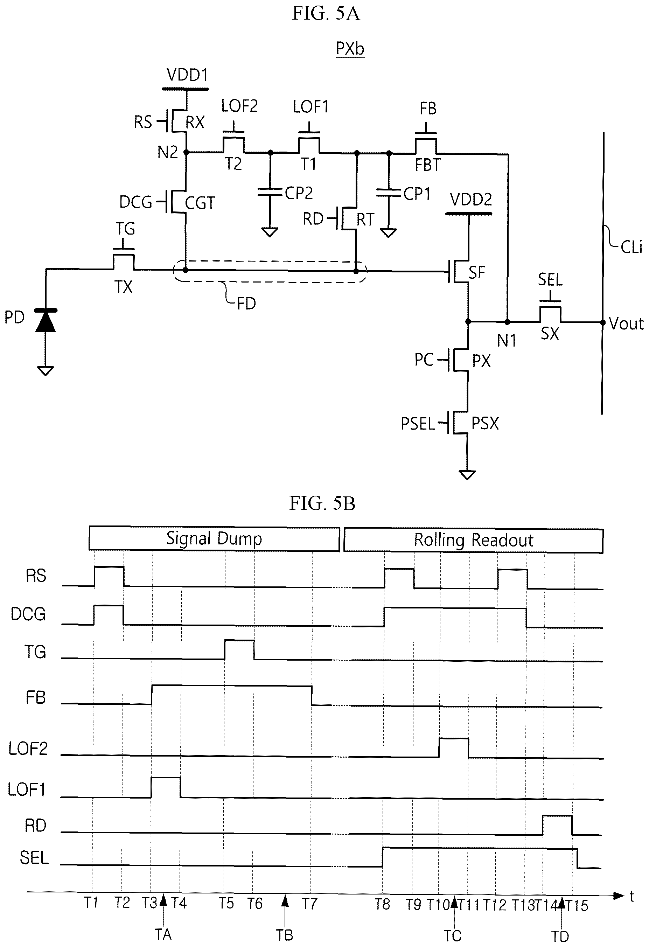

FIG. 5A is a circuit diagram of a pixel of an image sensor according to an example embodiment. The pixel PXb of FIG. 5A may correspond to the pixel PX of the image sensor 100 of FIG. 1. Referring to FIGS. 3A to 4D, detailed descriptions for overlapping or similar parts will be omitted.

Referring to FIG. 5A, the pixel PXb according to an example embodiment, unlike the pixel PXa described with reference to FIG. 4A, may include a read transistor RT connecting one terminal of the first capacitor CP1 and the floating diffusion region FD. The read transistor RT may be controlled by a read control signal RD. In the readout operation of in the global shutter mode, the pixel PXb may reduce the deterioration of the image quality because the charge corresponding to the pixel voltage stored in the first capacitor CP1 moves to the floating diffusion region FD through the read transistor RT. That is, because the charge corresponding to the pixel voltage move to the floating diffusion region FD through a small number of transistors, image quality can be improved. In addition, in the HCG mode of the rolling shutter mode, the pixel PXb can improve the image quality generated from the image sensor 100 because the second node N2 may be separated from the floating diffusion region FD.

In an example embodiment, the second capacitor CP2 may be configured as the lateral overflow integration capacitor (LOFIC). Depending on example embodiments, the first capacitor CP1 may also be configured as the lateral overflow integration capacitor (LOFIC).

FIG. 5B is a timing diagram explaining the operation of the pixel PXb in global shutter mode. Focus will be on describing parts that are different from the operation of the pixel PXa described with reference to FIG. 4B.

In the signal-dump operation, the read transistor RT may be maintained in a turn-off state by the low-level control signal RD.

For the rolling readout operation, at time T8, the reset control signal RS and the conversion gain control signal DCG may transition to the high-level, the reset transistor RX, the conversion gain transistor CGT may be turned on, and the floating diffusion region FD may be precharged. The selection control signal SEL may be maintained at the high-level during the rolling readout operation of the pixel voltage and the reset voltage, and the selection transistor SX may be maintained in a turn-on state.

At time T10, the second control signal LOF2 may transition to the high-level, and the second transistor T2 may be turned on. The conversion gain transistor CGT is in a turn-on state. The charge stored in the second capacitor CP2 may move to the floating diffusion region FD through the second transistor T2 and the conversion gain transistor CGT. At time TC, the reset voltage of the floating diffusion region FD may be amplified by the source follower transistor SF and output to the column line CLi through the selection transistor SX. In another example embodiment, the second transistor T2 and the conversion gain transistor CGT may be turned off, the read transistor RT may be turned on, and the charge stored in the second capacitor CP2 may move to the floating diffusion region FD through the read transistor RT.

At time T12, the reset control signal RS may transition to a the high-level again and the floating diffusion region FD may be precharged.

At time T13, the conversion gain control signal DCG may transition to the low-level, and the conversion gain transistor CGT may be turned off. Therefore, the second node N2 may be electrically separated from the floating diffusion region FD.

At time T14, the read control signal RD may transition to the high-level and the read transistor RT may be turned on. The first transistor T1 and the second transistor T2 are in turn-off states. The charge stored in the first capacitor CP1 may move to the floating diffusion region FD through the read transistor RT. At time TD, the pixel voltage of the floating diffusion region FD may be amplified by the source follower transistor SF and output to the column line CLi through the selection transistor SX.

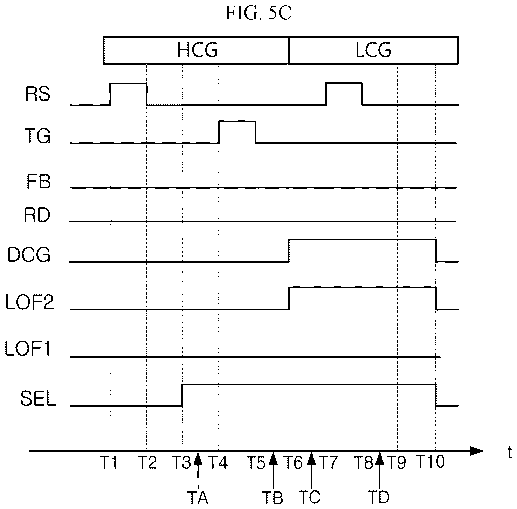

FIG. 5C is a timing diagram explaining the operation of the pixel PXb in the rolling shutter mode according to an example embodiment. Focus will be on describing parts that are different from the operation of the pixel PXa described with reference to FIG. 4C. In the pixel PXb, the read control signal RD may be maintained at the low-level in both the HCG mode and LCG mode readout operations, and the read transistor RT may be maintained in a turned-off state.

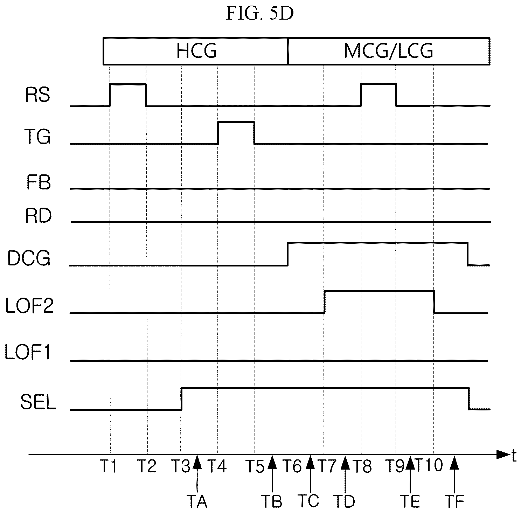

FIG. 5D is a timing diagram explaining the operation of the pixel PXb in the rolling shutter mode according to an example embodiment. Focus will be on describing parts that are different from the operation of the pixel PXa described with reference to FIG. 4D. In the pixel PXb, the read control signal RD may be maintained at the low-level in all of the HCG mode, the MCG mode, and LCG mode readout operations, and the read transistor RT may be maintained in a turned-off state.

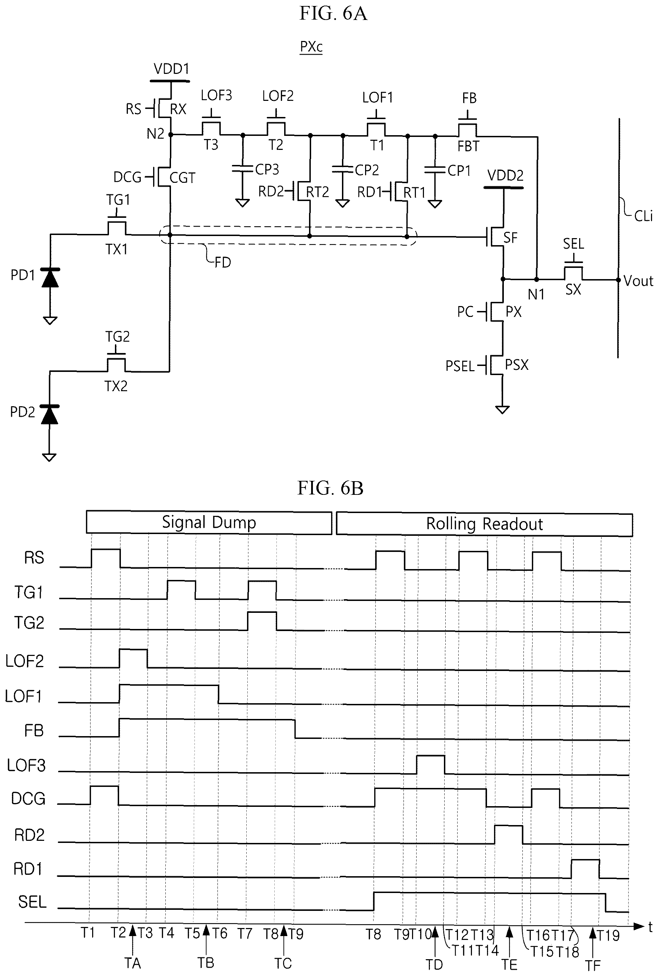

FIG. 6A is a circuit diagram of a pixel of an image sensor according to an example embodiment. The pixel PXc of FIG. 6A may correspond to the pixel PX of the image sensor 100 of FIG. 1. Referring to FIGS. 3A to 5D, detailed descriptions for overlapping or similar parts will be omitted.

Referring to FIG. 6A, the pixel PXc according to an example embodiment, unlike the pixel PXb described with reference to FIG. 5A, may include a plurality of photodiodes PD1 and PD2 and a plurality of transfer transistors TX1 and TX2, a third capacitor CP3, a second transistor T2, and a second read transistor RT2. The first read transistor RT1 may correspond to the read transistor RT in FIG. 5A, and the third transistor T3 may correspond to the second transistor T2 in FIG. 5A.

The pixel PXc according to an example embodiment may be a dual photodiode pixel. That is, one pixel PXc may include a plurality of photodiodes PD1 and PD2, and the plurality of photodiodes PD1 and PD2 may share the same microlens. The pixel PXc may correspond to some or all of the pixels PXs included in the pixel array 110 of the image sensor 100 of FIG. 1.

The example described with reference to FIGS. 6A to 6D will be described assuming that the pixel PXc is a dual photodiode pixel, but example embodiments may be similarly applied to a super photodiode pixel in which each of a plurality of pixels has a separate photodiode and share one and the same microlens.

The pixel PXc according to an example embodiment may separately store each voltage corresponding to the photocharges generated from the plurality of photodiodes PD1 and PD2 in different capacitors CP1 and CP2 each in the signal-dump operation of the global shutter mode. Alternatively, the voltage corresponding to the photocharge generated from the first photodiode PD1 may be stored in the second capacitor CP2, and the voltages corresponding to the photocharges generated from the first photodiode PD1 and the second photodiode PD2 may be stored together in the first capacitor CP1. The image sensor 100 may perform an autofocusing operation in the global shutter mode by utilizing the pixel voltage corresponding to the photocharge generated from the first photodiode PD1 of the pixel PXc and the pixel voltage corresponding to the photocharge generated from the second photodiode PD2.

In an example embodiment, when the pixel PXc that generates phase data used for the autofocusing is configured as a super photodiode pixel, the output in the rolling shutter mode of the pixel PXc may not be used for image generation and a bad pixel correction processing may be performed.

In addition, in the readout operation of the global shutter mode, the pixel PXc may reduce deterioration of image quality because the charges corresponding to the pixel voltages stored in the first capacitor CP1 and/or the second capacitor CP2 may move to the floating diffusion region FD through one of the read transistors RT1 and RT2. In addition, in the HCG mode of the rolling shutter mode, the pixel PXc can improve the image quality generated from the image sensor 100 because the second node N2 may be separated from the floating diffusion region FD.

In an example embodiment, the third capacitor CP3 may be configured as the lateral overflow integration capacitor (LOFIC). Depending on example embodiments, the first capacitor CP1 and/or the second capacitor CP2 may also be configured as the lateral overflow integration capacitor (LOFIC).

FIG. 6B is a timing diagram explaining the operation of the pixel PXb in the global shutter mode. The operation of the pixel PXc described with reference to FIG. 6B will be described assuming that the voltage corresponding to the photocharge generated from the first photodiode PD1 may be stored in the second capacitor CP2, and the voltages corresponding to the photocharges generated from the first photodiode PD1 and the second photodiode PD2 may be stored together in the first capacitor CP1. The reset voltage may be stored in the third capacitor CP3. Focus will be on describing parts that are different from the operation of the pixel PXb described with reference to FIG. 5B.

In the signal-dump operation, the read transistors RT1, and RT2 and the third transistor T3 may be maintained in a turn-off state by the low-level read control signals RD1 and RD2, and a third control signal LOF3.

At time T1, the reset transistor RX and the conversion gain transistor CGT may be turned on by the high-level reset control signal RS and the conversion gain control signal DCG, and the floating diffusion region FD may be reset.

At time T2, the source follower transistor SF may output the reset voltage to the first node N1 corresponding to the voltage of the floating diffusion region FD. The feedback transistor FBT, the first transistor T1, and the second transistor T2 may be turned on by the high-level feedback control signal FB, the first control signal LOF1, and the second control signal LOF2. At time TA, the reset voltage of the first node N1 may be stored in the third capacitor CP3.

At time T3, the second transistor T2 may be turned off by the second control signal LOF2, and at time T4, the pixel voltage corresponding to the photocharge generated from the first photodiode PD1 may be output to the first node N1 by turning on the first transfer transistor TX1. At time TB, the pixel voltage of the first node N1 corresponding to the photocharge generated from the first photodiode PD1 may be stored in the second capacitor. At time T7, the pixel voltages corresponding to the photocharges generated from both the first photodiode PD1 and the second photodiode PD2 may be output to the first node N1 by turning on the first transfer transistor TX1 and the second transfer transistor TX2. At time TC, the pixel voltages corresponding to the photocharges generated from the first photodiode PD1 and the second photodiode PD2 may be stored in the first capacitor CP1.

For the rolling readout operation, at time T8, the reset control signal RS and the conversion gain control signal DCG may transition to the high-level, the reset transistor RX, the conversion gain transistor CGT may be turned on, and the floating diffusion region FD may be precharged. The selection control signal SEL may be maintained at the high-level during the rolling readout operation of the pixel voltage and the reset voltage, and the selection transistor SX may be maintained in a turn-on state.

At time T10, the third control signal LOF3 may transition to the high-level, and the third transistor T3 may be turned on. The conversion gain transistor CGT is in a turn-on state. The charge stored in the third capacitor CP3 may move to the floating diffusion region FD through the third transistor T3 and the conversion gain transistor CGT. At time TD, the reset voltage of the floating diffusion region FD may be amplified by the source follower transistor SF and output to the column line CLi through the selection transistor SX.

At time T12, the reset control signal RS may transition to a the high-level again and the floating diffusion region FD may be precharged.

At time T13, the conversion gain control signal DCG may transition to the low-level, and the conversion gain transistor CGT may be turned off. Therefore, the second node N2 may be electrically separated from the floating diffusion region FD.

At time T14, the second read control signal RD2 may transition to the high-level, and the second read transistor RT2 may be turned on. The second transistor T2 and the third transistor T3 are in turn-off states. The charge stored in the second capacitor CP2 may move to the floating diffusion region FD through the second read transistor RT2. At time TE, the pixel voltage of the floating diffusion region FD may be amplified by the source follower transistor SF and output to the column line CLi through the selection transistor SX.

At time T16, the floating diffusion region FD may be precharged again, and at time T18, the first read transistor RT1 may be turned on by the high-level first read control signal RD1, and the charge stored in the first capacitor CP1 may move to the floating diffusion region FD through the first read transistor (RT1). At time TF, the pixel voltage of the floating diffusion region FD may be amplified by the source follower transistor SF and output to the column line CLi through the selection transistor SX.

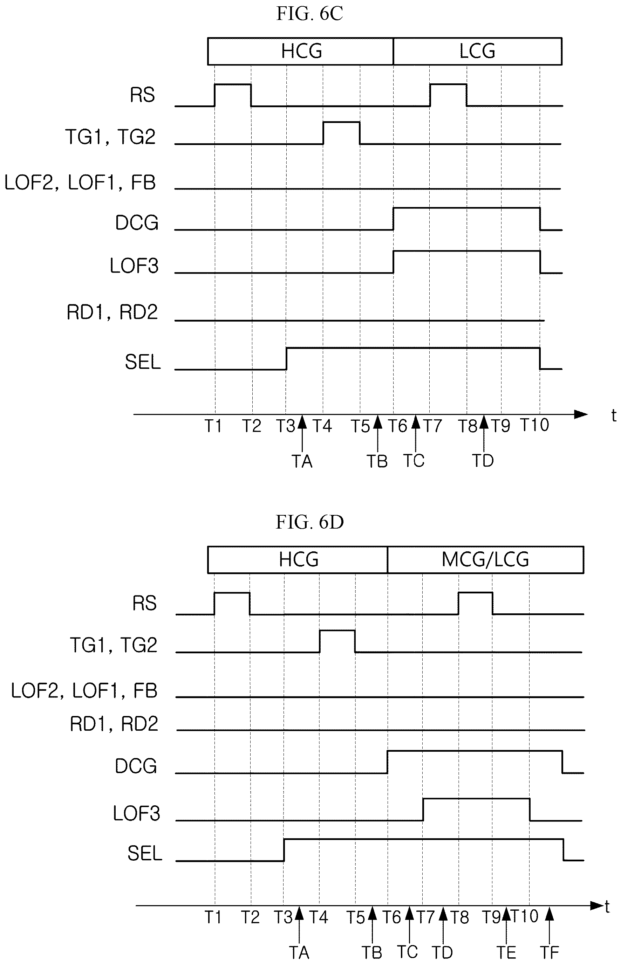

FIG. 6C is a timing diagram explaining the operation of the pixel PXc in the rolling shutter mode according to an example embodiment. The operation of the pixel PXc described with reference to FIG. 6C will be described assuming that the pixel PXc is a dual photodiode pixel. Referring to FIG. 4C, the description will focus on differences from the operation of the pixel PXa described.

The operation of the pixel PXc described with reference to FIG. 6C may provide a plurality of conversion gain modes. In an example embodiment, the plurality of conversion gain modes may include the HCG mode and the LCG mode.

In the pixel PXc, the first and second read control signals RD1 and RD2 may be maintained at the low-level in the readout operations of both the HCG mode and LCG mode, and the first and second read transistors RT1 and RT2 may be maintained in turn-off states.

In the HCG mode, after the reset voltage is sampled at time TA, the first and second transfer transistors TX1 and TX2 may be simultaneously turned on by the first and second transfer control signals TG1 and TG2. Therefore, the photocharges generated from the first and second photodiodes PD1 and PD2 may simultaneously move to the floating diffusion region FD, and the pixel voltage may be sampled at time TB. In the LCG mode, the conversion gain transistor CGT may be turned on, and the third capacitor CP3 may be electrically connected to the floating diffusion region FD. The pixel voltage of the LCG mode may be sampled at time TC while the third capacitor CP3 is electrically connected to the floating diffusion region FD. The reset transistor RX may be turned on at time T7, and the reset voltage of the LCG mode may be sampled at time TD.

FIG. 6D is a timing diagram explaining the operation of the pixel PXc in the rolling shutter mode according to an example embodiment. The operation of the pixel PXc described with reference to FIG. 6D will be described assuming that the pixel PXc is a dual photodiode pixel. Referring to FIG. 4D, the description will focus on differences from the operation of the pixel PXa described.

The operation of the pixel PXd described with reference to FIG. 6D may provide a plurality of conversion gain modes. In an example embodiment, the plurality of conversion gain modes may include the HCG mode, the MCG mode, and the LCG mode.

In the pixel PXc, the first and second read control signals RD1 and RD2 may be maintained at the low-level in the readout operations of both the HCG mode and LCG mode, and the first and second read transistors RT1 and RT2 may be maintained in turn-off states. In addition, in the HCG mode, after the reset voltage is sampled at TA, the first and second transfer transistors TX1 and, TX2 may be simultaneously turned on by the first and second transfer control signals TG1 and TG2. Therefore, the photocharges generated from the first and second photodiodes PD1 and PD2 may simultaneously move to the floating diffusion region FD, and be sampled at time TB. In the MCG mode and the LCG mode, the conversion gain transistor CGT may be maintained in a turn-on state. At time TC, the pixel voltage of the MCG mode of the floating diffusion region FD may be sampled while the third transistor T3 is in a turn-off state. At time T7, the third transistor T3 may be turned on, and the third capacitor CP3 may be electrically connected to the floating diffusion region FD. At time TD, the pixel voltage of the LCG mode of the floating diffusion region FD may be sampled. At time T8, the floating diffusion region FD may be reset, and at time TE, the reset voltage of the LCG mode may be sampled while the third capacitor CP3 is electrically connected to the floating diffusion region FD. At time T10, the third capacitor CP3 may be electrically separated from the floating diffusion region FD, and at time TF, the reset voltage of the MCG mode of the floating diffusion region FD may be sampled.

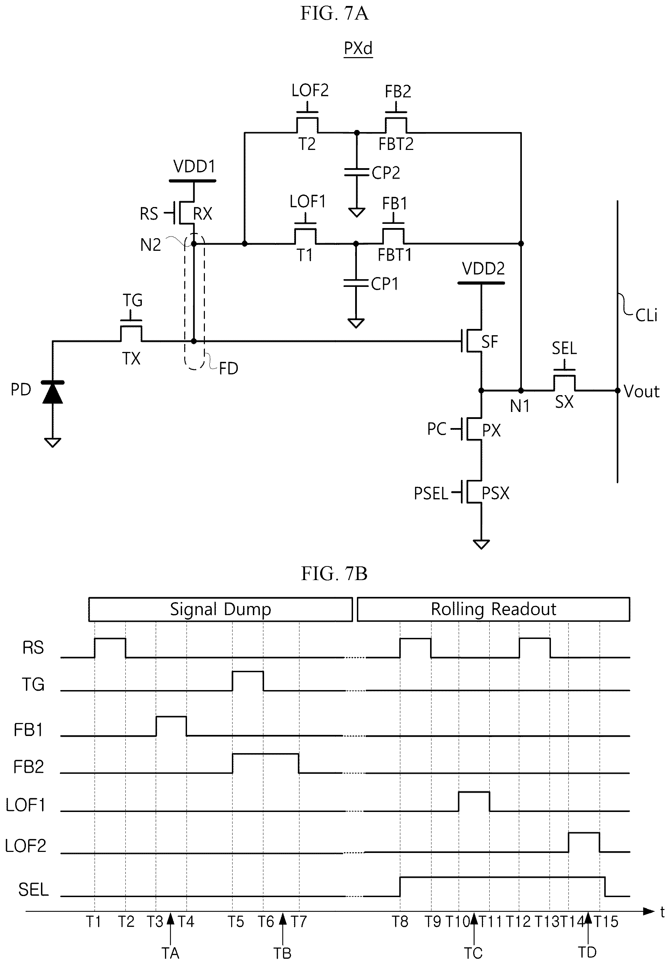

FIG. 7A is a circuit diagram of a pixel of an image sensor according to an example embodiment. The pixel PXd of FIG. 7A may correspond to the pixel PX of the image sensor 100 of FIG. 1. Referring to FIGS. 3A to 6B, detailed descriptions for overlapping or similar parts will be omitted.

Referring to FIG. 7A, in the pixel PXd according to an example embodiment, unlike the pixel PX described with reference to FIG. 3A, a first feedback transistor FBT1 and a second feedback transistor FBT2 may be connected and arranged in parallel between the first node N1 and the second node N2. In addition, the first transistor T1 and the second transistor T2 may be connected in series with the first feedback transistor FBT1 and the second feedback transistor FBT2 each. One terminal of the first capacitor CP1 may be connected to one terminal of each of the first feedback transistor FBT1 and the first transistor T1, and one terminal of the second capacitor CP2 may be connected to one terminal of each of the second feedback transistor FBT2 and the second transistor T2. Therefore, the first capacitor CP1 and the second capacitor CP2 may be connected in parallel between the first node N1 and the second node N2.

In an example embodiment, the second capacitor CP2 may be configured as the lateral overflow integration capacitor (LOFIC). Depending on example embodiments, the first capacitor CP1 may also be configured as the lateral overflow integration capacitor (LOFIC). That is, at least one of the first capacitor CP1 and the second capacitor CP2 may be configured as the lateral overflow integration capacitor (LOFIC).

The pixel PXd according to an example embodiment may operate in the global shutter mode using a small number of transistors. In addition, a path between each of the first and second capacitors CP1 and CP2 and the floating diffusion region FD may be symmetrical each other. Therefore, correlated double sampling (CDS) may be performed accurately even in the global shutter mode.

FIG. 7B is a timing diagram explaining the operation of the pixel PXd in the global shutter mode.

The operation of the pixel PXd described with reference to FIG. 7B may store the reset voltage and the pixel voltage in the first capacitor CP1 and the second capacitor CP2 each. Focus will be on describing parts that are different from the operation of the pixel PX described with reference to FIG. 3B.

In the signal-dump operation, the first and second transistors T1 and T2 may be maintained in turn-off states by the low-level first and second control signals LOF1 and LOF2.

At time T1, the reset control signal RS may transition to the high-level and the floating diffusion region FD may be reset.

At time T2, the source follower transistor SF may output the reset voltage to the first node N1 corresponding to the voltage of the floating diffusion region FD.

At time T3, the first feedback control signal FB1 may transition to the high-level and the first feedback transistor FBT1 may be turned on. At time TA, the reset voltage of the first node N1 may be stored in the first capacitor CP1.

At time T5, the transfer control signal TG may transition to the high-level, and the charge of the photodiode PD may move to the floating diffusion region FD. The second feedback control signal FB2 may transition to the high-level and the second feedback transistor FBT2 may be turned on. corresponding to the voltage of the floating diffusion region FD, the source follower transistor SF may output the pixel voltage to the first node N1. At time TB, the pixel voltage of the first node N1 may be stored in the second capacitor CP2.

For the rolling readout operation, at time T8, the reset control signal RS may transition to the high-level and the floating diffusion region FD may be reset (precharged). The selection control signal SEL may be maintained at the high-level during the rolling readout operations of the pixel voltage and the reset voltage, and the selection transistor SX may be turned on.

At time T10, the first control signal LOF1 may transition to the high-level, the first transistor T1 may be turned on, and the charge stored in the first capacitor CP1 may move to the floating diffusion region FD. At time TC, the reset voltage of the floating diffusion region FD may be output to the column line CLi. The first transistor T1 may be turned off at time T 11 unlike the operation of the pixel PX in FIG. 3B.

At time T12, the reset control signal RS may transition to the high-level again and the floating diffusion region FD may be reset (precharged).

At time T14, the second control signal LOF2 may transition to the high-level, the second transistor T1 may be turned on, and the charge stored in the second capacitor CP2 may move to the floating diffusion region FD. At time TD, the pixel voltage of the floating diffusion region FD may be output to the column line CLi.

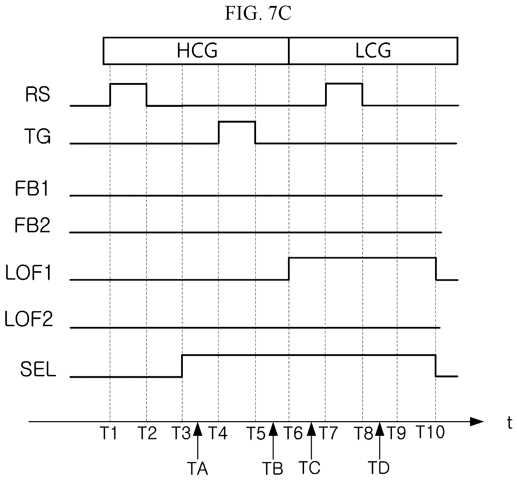

FIG. 7C is a timing diagram explaining the operation of the pixel PXd in the rolling shutter mode according to an example embodiment.

The operation of the pixel PXd described with reference to FIG. 7C may provide a plurality of conversion gain modes. Focus will be on describing parts that are different from the operation of the pixel PX described with reference to FIG. 3F.

In an example embodiment, the plurality of conversion gain modes may include the HCG mode and the LCG mode. In the LCG mode, capacitance of the first capacitor CP1 or the second capacitor CP2 may be provided to the floating diffusion region FD. Alternatively, in the LCG mode, the capacitances of both the first capacitor CP1 and the second capacitor CP2 may be provided to the floating diffusion region FD. In another example embodiment, the plurality of conversion gain modes may include the HCG mode, the MCG mode, and the LCG mode similar to the example described with reference to FIG. 4D. In this case, the capacitance of the first capacitor CP1 may be configured differently from the capacitance of the second capacitor CP2. Alternatively, in the MCG mode, the capacitance of the first capacitor CP1 or the second capacitor CP2 may be provided to the floating diffusion region FD, and in the LCG mode, the capacitances of both the first capacitor CP1 and the second capacitor CP2 may be provided to the floating diffusion region FD.

The operation of the pixel PXd described with reference to FIG. 7C will be described assuming that the plurality of conversion gain modes include the HCG mode and the LCG mode. In addition, the description will be made assuming that the capacitance of the first capacitor CP1 is provided to the floating diffusion region FD in the LCG mode.

In the HCG mode and the LCG mode, the first feedback control signal FB 1 and the second feedback control signal FB2 may be maintained at the low-level.

In the HCG mode, the floating diffusion region FD may be reset by turning on the reset transistor RX at time T1, the selection transistor SX may be turned on at time T3, and the reset voltage of the floating diffusion region FD may be output to the column line (CLi at time TA. At time T4, the transfer transistor TX may be turned on and the charge of the photodiode PD may move to the floating diffusion region FD, and at time TB, the pixel voltage of the floating diffusion region FD may be output to the column line CLi.

In the LCG mode, at time T6, because the first transistor T1 may be turned on by the high-level first control signal LOF1, the first capacitor CP1 may be electrically connected to the floating diffusion region FD. At time TC, the pixel voltage of the floating diffusion region FD may be output to the column line CLi. At time T7, the floating diffusion region FD may be reset again by turning on the reset transistor RX while the first transistor T1 is turned on. At time TD, the reset voltage of the floating diffusion region FD may be output to the column line CLi.

As described above, when the pixel PXd provides the HCG mode, the MCG mode, and the LCG mode, the pixel PXd may operate similarly to the example described with reference to FIG. 4D.

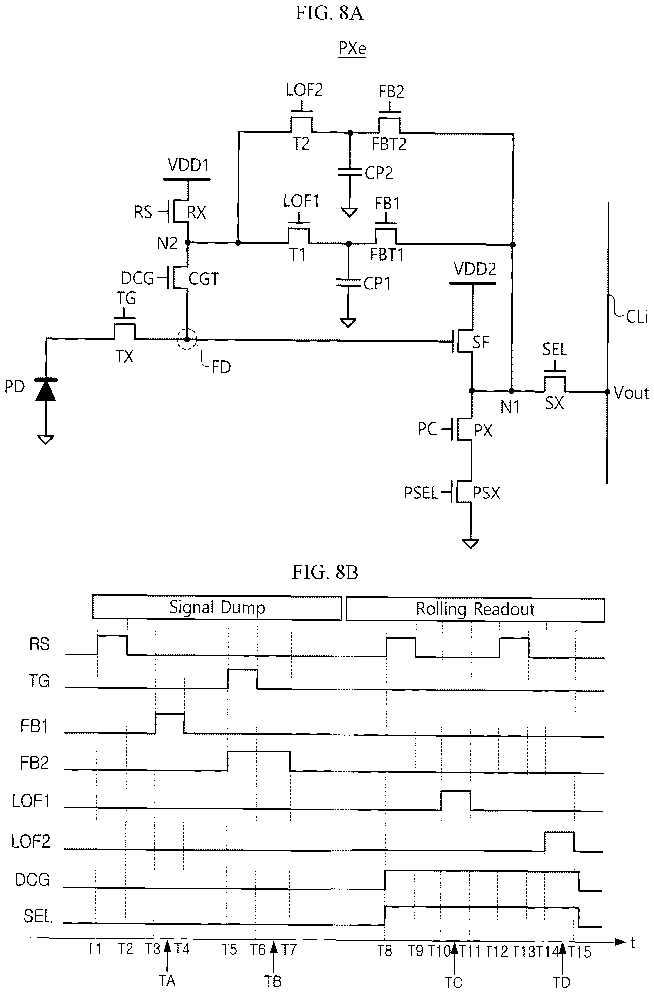

FIG. 8A is a circuit diagram of a pixel of an image sensor according to an example embodiment. The pixel PXe of FIG. 8A may correspond to the pixel PX of the image sensor 100 of FIG. 1. Referring to FIGS. 3A to 7C, detailed descriptions for overlapping or similar parts will be omitted.

Referring to FIG. 8A, the pixel PXe according to an example embodiment, unlike the pixel PXd described with reference to FIG. 7A, may include a conversion gain transistor CGT connecting the second node N2 and the floating diffusion region FD. The second node N2 may be selectively electrically coupled to the floating diffusion region FD by turning on or off the conversion gain transistor CGT. The first capacitor CP1 and/or the second capacitor CP2 may be selectively electrically coupled with a floating diffusion region FD by turning on or off the first transistor T1 and/or the second transistor T2 and the conversion gain transistor CGT.

In an example embodiment, at least one of the first capacitor CP1 and the second capacitor CP2 may be configured as the lateral overflow integration capacitor (LOFIC).

The pixel PXe according to example embodiments may operate in the global shutter mode using a small number of transistors. In addition, a path between each of the first and second capacitors CP1 and CP2 and the floating diffusion region FD may be symmetrical each other. Therefore, correlated double sampling (CDS) may be performed accurately even in the global shutter mode. In addition, in the HCG mode of the rolling shutter mode, the pixel PXd can improve the image quality generated from the image sensor 100 because the second node N2 may be separated from the floating diffusion region FD.

FIG. 8B is a timing diagram explaining the operation of the pixel PXe in the global shutter mode.

The operation of the pixel PXe described with reference to FIG. 8B may store the reset voltage and the pixel voltage each in the first capacitor CP1 and the second capacitor CP2. Focus will be on describing parts that are different from the operation of the pixel PXd described with reference to FIG. 7B.

In the pixel PXe, the conversion gain transistor CGT may be maintained in a turn-off state by the low-level conversion gain control signal DCG in the signal-dump operation, and may be maintained in a turn-on state by the high-level conversion gain control signal DCG in the rolling readout operation.

In the signal-dump operation, at time TA, the reset voltage may be stored in the first capacitor CP1 through the first feedback transistor FBT1 turned on by the high-level first feedback control signal FB1. At time TB, the pixel voltage may be stored in the second capacitor CP2 through the second feedback transistor FBT2 turned on by the high-level second feedback control signal FB2.

In the rolling readout operation, at time TC, the reset voltage stored in the first capacitor CP1 may move to the floating diffusion region FD by the first transistor T1 turned on by the first control signal LOF1, and the reset voltage may be output to the column line CLi. At time TD, the pixel voltage stored in the second capacitor CP2 may move to the floating diffusion region FD by the second transistor T2 turned on by the second control signal LOF2, and the pixel voltage may be output to the column line.

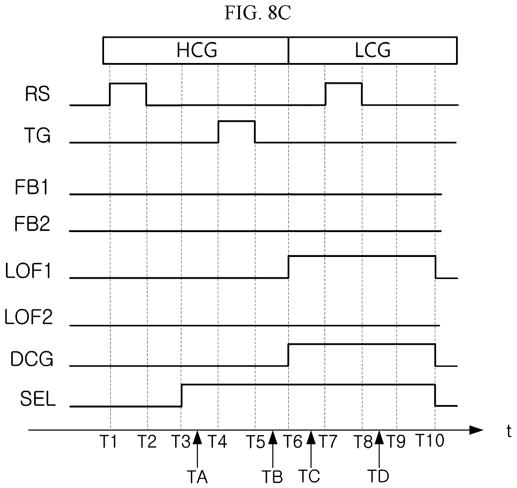

FIG. 8C is a timing diagram explaining the operation of the pixel PXe in the rolling shutter mode according to an example embodiment.

The operation of the pixel PXe described with reference to FIG. 8C may provide a plurality of conversion gain modes. Focus will be on describing parts that are different from the operation of the pixel PXd described with reference to FIG. 7C.

In an example embodiment, the plurality of conversion gain modes may include the HCG mode and the LCG mode. In the LCG mode, capacitance of the first capacitor CP1 or the second capacitor CP2 may be provided to the floating diffusion region FD. Alternatively, in the LCG mode, the capacitances of both the first capacitor CP1 and the second capacitor CP2 may be provided to the floating diffusion region FD. Alternatively, in the LCG mode, junction capacitance of the second node N2 may be provided to the floating diffusion region FD.

In another example embodiment, the plurality of conversion gain modes may include the HCG mode, the MCG mode, and the LCG mode similar to the example described with reference to FIG. 4D. In this case, the capacitance of the first capacitor CP1 may be configured differently from the capacitance of the second capacitor CP2. Alternatively, in the MCG mode, the capacitance of the first capacitor CP1 or the second capacitor CP2 may be provided to the floating diffusion region FD, and in the LCG mode, the capacitances of both the first capacitor CP1 and the second capacitor CP2 may be provided to the floating diffusion region FD. Alternatively, in the MCG mode, the junction capacitance of the second node N2 may be provided to the floating diffusion region FD, and in the LCG mode, the capacitance of the first capacitor CP1 or the second capacitor CP2 may be provided in the floating diffusion region FD.

The operation of the pixel PXe described with reference to FIG. 8C will be described assuming that the plurality of conversion gain modes include the HCG mode and the LCG mode. In addition, the description will be made assuming that the capacitance of the first capacitor CP1 is provided to the floating diffusion region FD in the LCG mode.

The conversion gain transistor CGT may be maintained in a turn-off state in HCG mode and in a turn-on state in the LCG mode. The first transistor T1 may be turned off in the HCG mode and turned on in the LCG mode so that the capacitance of the first capacitor CP1 may be provided to the floating diffusion region FD. In the LCG mode, the pixel PXe may sample (output to the column line CLi) the pixel voltage and the reset voltage at time TC and at time TD each while the first capacitor CP1 may be electrically connected to the floating diffusion region FD.

In another example embodiment, the operation of the pixel PXe may include the HCG mode, the MCG mode, and the LCG mode. In this case, the pixel PXe may provide the junction capacitance of the second node N2 to the floating diffusion region FD by turning on the conversion gain transistor CGT in the MCG mode. In addition, in the LCG mode, the pixel PXe may provide the junction capacitance of the second node N2 and the capacitance of the first capacitor CP1 to the floating diffusion region FD by turning on the conversion gain transistor CGT and the first transistor T1.

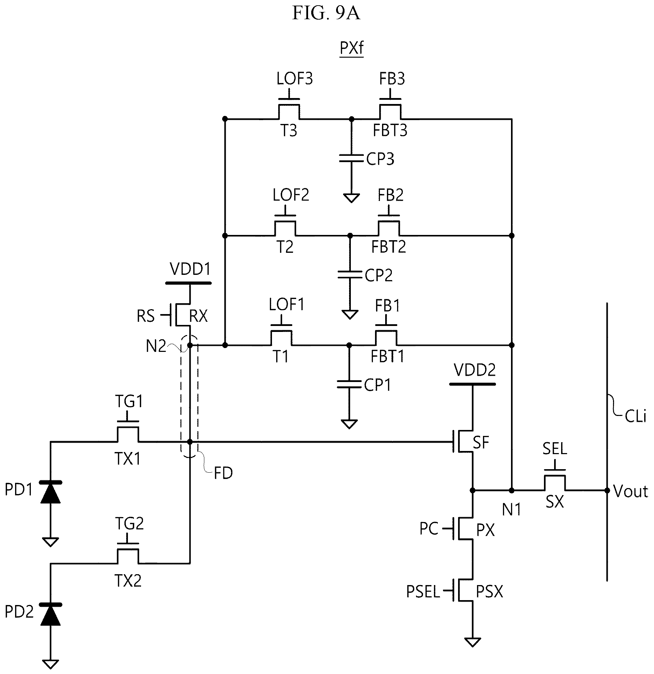

FIG. 9A is a circuit diagram of a pixel of an image sensor according to an example embodiment. The pixel PXf of FIG. 9A may correspond to the pixel PX of the image sensor 100 of FIG. 1. Referring to FIGS. 3A to 8C, detailed descriptions for overlapping or similar parts will be omitted.

Referring to FIG. 9A, in the pixel PXf according to example embodiments, unlike the pixel PXd described with reference to FIG. 7A, a third feedback transistor FBT3 may be additionally connected and arranged in parallel between the first node N1 and the second node N2. In addition, a third capacitor CP3 may be additionally connected in parallel between the first node N1 and the second node N2. That is, the first feedback transistor FBT1, the second feedback transistor FBT2, and the third feedback transistor FBT3 may be connected in parallel between the first node N1 and the second node N2. In addition, the first capacitor CP1, the second capacitor CP2, and the third capacitor CP3 each connected with each of one terminal of the first feedback transistor FBT1, the second feedback transistor FBT2, and the third feedback transistor FBT3 may also be connected in parallel with each other. The first transistor T1, the second transistor T2, and the third transistor T3 each may be connected in series with the first feedback transistor FBT1, the second feedback transistor FBT2, and the third feedback transistor FBT3.

In an example embodiment, at least one of the first capacitor CP1, the second capacitor CP2, and the third capacitor CP3 may be configured as the lateral overflow integration capacitor (LOFIC).

The pixel PXf according to example embodiments may operate in the global shutter mode using a small number of transistors. In addition, a path between each of the first capacitor CP1, the second capacitor CP2, and the third capacitor CP3 and the floating diffusion region FD may be symmetrical. Therefore, correlated double sampling (CDS) may be performed accurately even in the global shutter mode.

The example described with reference to FIGS. 9A to 9C will be described assuming that the pixel PXf is a dual photodiode pixel, but depending on example embodiments, the pixel PXf may be a super photodiode pixel. The pixel PXf may correspond to some or all of the pixels PXs included in the pixel array 110 of the image sensor 100 of FIG. 1.

The pixel PXf may generate the pixel voltage for an auto-focusing operation in the global shutter mode. For example, in the signal-dump operation of the global shutter mode, the voltages corresponding to the photocharges generated from the plurality of photodiodes PD1 and PD2 may be separately stored in different capacitors CP1 and CP2. Alternatively, a voltage corresponding to the photocharge generated from the first photodiode PD1 may be stored in the second capacitor CP2, and a voltage corresponding to the photocharges generated from the first photodiode PD1 and the second photodiode PD2 may be stored together in the first capacitor CP1. The image sensor 100 may perform an autofocusing operation in the global shutter mode by utilizing the pixel voltage corresponding to the photocharge generated from the first photodiode PD1 of the pixel PXc and the pixel voltage corresponding to the photocharge generated from the second photodiode PD2.

In an example embodiment, when the pixel PXf that generates phase data used for the autofocusing is configured as a super photodiode pixel, the output in the rolling shutter mode of the pixel PXf may not be used for image generation and a bad pixel correction processing may be performed.

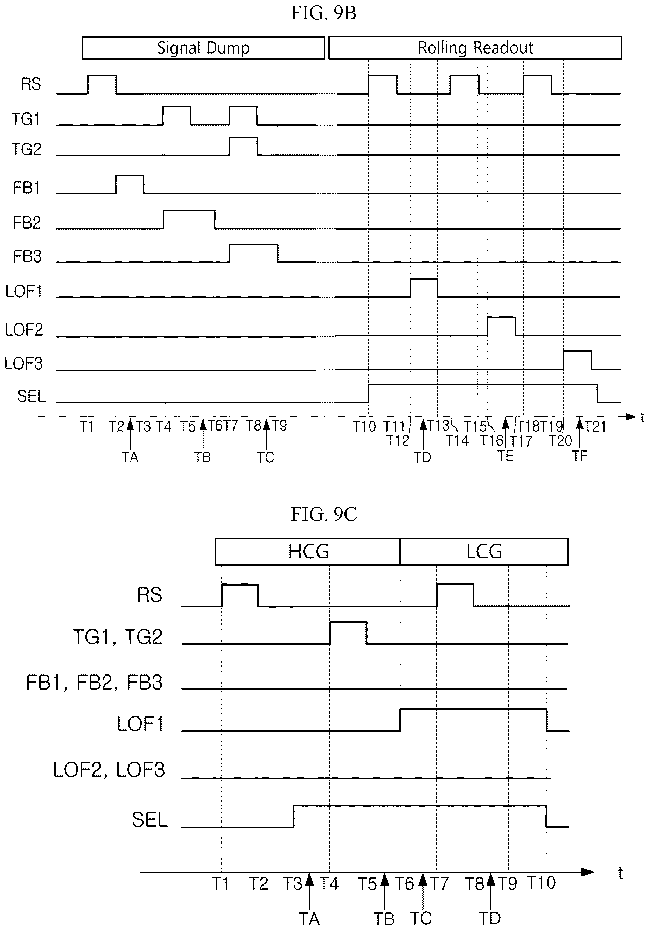

FIG. 9B is a timing diagram explaining the operation of the pixel PXf in the global shutter mode.

The operation of the pixel PXf described with reference to FIG. 9B will be described assuming that the voltage corresponding to the photocharge generated from the first photodiode PD1 may be stored in the second capacitor CP2, and the voltage corresponding to the photocharges generated from the first photodiode PD1 and the second photodiode PD2 may be stored together in the first capacitor CP3. The reset voltage may be stored in the first capacitor CP1. Focus will be on describing parts that are different from the operation of the pixel PXd described with reference to FIG. 7B.

In the signal-dump operation, at time TA, the reset voltage may be stored in the first capacitor CP1 through the first feedback transistor turned on by the high-level first feedback control signal FB1. At time TB, the pixel voltage corresponding to the photocharge of the first photodiode PD1 may be stored in the second capacitor CP2 through the second feedback transistor turned on by the high-level second feedback control signal FB2. At time TC, the pixel voltage corresponding to the photocharges of both the first photodiode PD1 and the second photodiode PD2 may be stored in the third capacitor CP3 through the third feedback transistor turned on by the high-level third feedback control signal FB3.

In the rolling readout operation, at time TD, the reset voltage stored in the first capacitor CP1 may move to the floating diffusion region FD by the first transistor T1 turned on by the first control signal LOF1, the reset voltage may be output to the column line CLi. At time TE, the pixel voltage stored in the second capacitor CP2 may move to the floating diffusion region FD by the second transistor T2 turned on by the second control signal LOF2. The pixel voltage corresponding to the photocharge of the first photodiode PD1 may be output to the column line CLi. At time TF, the pixel voltage stored in the third capacitor CP3 may move to the floating diffusion region FD. The pixel voltage corresponding to the photocharges of both the first photodiode PD1 and the second photodiode PD2 may be output to the column line CLi.

FIG. 9C is a timing diagram explaining the operation of the pixel PXf in the rolling shutter mode according to an example embodiment. The operation of the pixel PXf described with reference to FIG. 9C will be described assuming that the pixel PXf is a dual photodiode pixel. Focus will be on describing parts that are different from the operation of the pixel PXe described with reference to FIG. 8C.

The operation of the pixel PXf described with reference to FIG. 9C may provide a plurality of conversion gain modes. In an example embodiment, the plurality of conversion gain modes may include the HCG mode and the LCG mode.

In the pixel PXf, the second and third control signals LOF2 and LOF3 may be maintained at the low-level in the readout operations of both the HCG mode and the LCG mode, and the second and third transistors T2 and T3 may be maintained in a turn-on state. The first, second, and third feedback transistors FBT1, FBT2, and FBT3 may be maintained at the low-level in all readout operations.

In the HCG mode, after the reset voltage is sampled at time TA, the first and second transfer transistors TX1 and TX2 may be simultaneously turned on by the first and second transfer control signals TG1 and TG2. Therefore, the photocharges generated from the first and second photodiodes PD1 and PD2 may simultaneously move to the floating diffusion region FD, and at time TB, the pixel voltage may be sampled. In the LCG mode, the first transistor T1 may be turned on, and the first capacitor CP1 may be electrically connected to the floating diffusion region FD. The pixel voltage of the LCG mode may be sampled at time TC while the first capacitor CP1 is electrically connected to the floating diffusion region FD. At time T7, the reset transistor RX may be turned on and at time TD, the reset voltage of the LCG mode may be sampled.

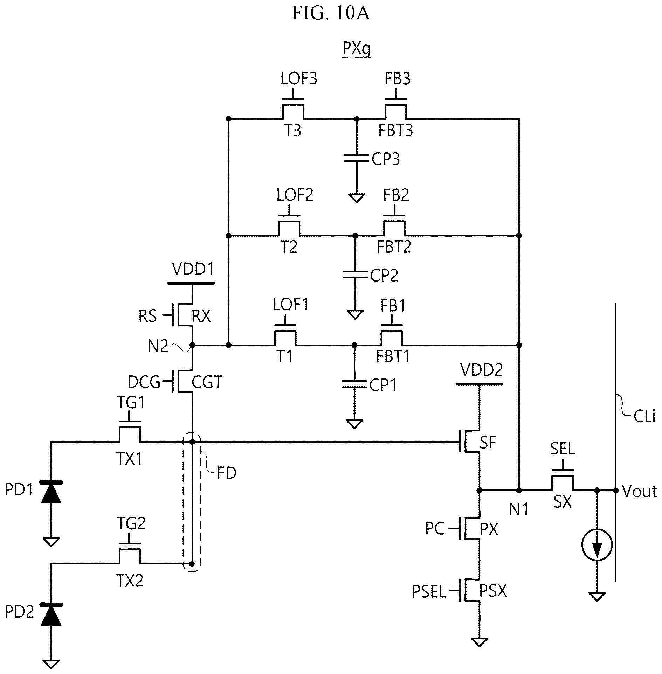

FIG. 10A is a circuit diagram of a pixel of an image sensor according to an example embodiment. The pixel PXg of FIG. 10A may correspond to the pixel PX of the image sensor 100 of FIG. 1. Referring to FIGS. 3A to 9C, detailed descriptions for overlapping or similar parts will be omitted.

Referring to FIG. 10A, the pixel PXg according to an example embodiment, unlike the pixel PXf described with reference to FIG. 9A, may include a conversion gain transistor CGT connecting the second node N2 and the floating diffusion region FD. In an example embodiments, the second node N2 may be selectively electrically coupled to the floating diffusion region FD by turning on or off the conversion gain transistor CGT. In another embodiment, at least one of the first capacitor CP1, the second capacitor CP2, and the third capacitor CP2 may be selectively electrically coupled to the floating diffusion region FD by turning on or off the first transistor T1, the second transistor T2, the third transistor T3, and the conversion gain transistor CGT.

In an example embodiment, at least one of the first capacitor CP1, the second capacitor CP2, and the third capacitor CP3 d overflow integration capacitor (LOFIC).

The pixel PXg according to example embodiments may operate in in the global shutter mode using a small number of transistors, and a path between each of the capacitors CP1, CP2, and CP3 and the floating diffusion region FD may be symmetrical. Therefore, correlated double sampling (CDS) may be performed accurately even in the global shutter mode. The pixel PXg may generate the pixel voltage for an auto-focusing operation in the global shutter mode. The pixel PXg may selectively provide junction capacitance of the second node N2 to the floating diffusion region FD by turning on or off the conversion gain transistor CGT. In addition, the pixel PXg may selectively provide at least one of capacitance among capacitors CP1, CP2, and CP3 to the floating diffusion region FD by turning on the conversion gain transistor CGT and selectively turning on or off the first, second, and third transistors T1, T2, and T3. Therefore, pixel PXg may provide a plurality of conversion gain modes in the rolling shutter mode. In addition, in the HCG mode of the rolling shutter mode, the pixel PXg can improve the image quality generated from the image sensor 100 because the second node N2 may be separated from the floating diffusion region FD.

The example described with reference to FIGS. 10A to 10C will be described assuming that the pixel PXg is a dual photodiode pixel, but depending on example embodiments, the pixel PXg may be a super photodiode pixel. The pixel PXg may correspond to some or all of the pixels PXs included in the pixel array 110 of the image sensor 100 of FIG. 1. In an example embodiment, when the pixel PXg that generates phase data used for the autofocusing is configured as a super photodiode pixel, the output in the rolling shutter mode of the pixel PXg may not be used for image generation and a bad pixel correction processing may be performed.

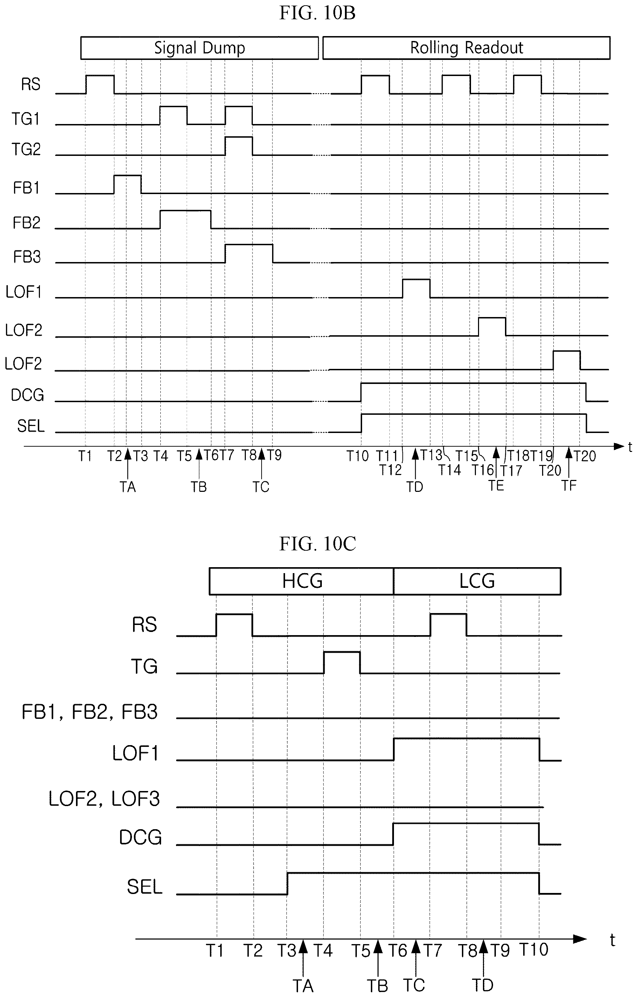

FIG. 10B is a timing diagram explaining the operation of the pixel PXg in the global shutter mode. Focus will be on describing parts that are different from the operation of the pixel PXf described with reference to FIG. 9B.

The operation of the pixel PXg described with reference to FIG. 10B will be described assuming that a voltage corresponding to the photocharge generated from the first photodiode PD1 may be stored in the second capacitor CP2, and a voltage corresponding to the photocharges generated from the first photodiode PD1 and the second photodiode PD2 may be stored together in the third capacitor CP3. The reset voltage may be stored in the first capacitor CP1. Focus will be on describing parts that are different from the operation of the pixel PXf described with reference to FIG. 9B.

The conversion gain transistor CGT may be maintained in a turn-off state by the low-level conversion gain control signal DCG in the signal-dump operation, and may be maintained in a turn-on state by the high-level conversion gain control signal DCG in the rolling readout operation.

FIG. 10C is a timing diagram explaining the operation of the pixel PXg in the rolling shutter mode according to an example embodiment. The operation of the pixel PXg described with reference to FIG. 10C will be described assuming that the pixel PXg is a dual photodiode pixel. Focus will be on describing parts that are different from the operation of the pixel PXf described with reference to FIG. 9C.

The operation of the pixel PXg described with reference to FIG. 10C may provide a plurality of conversion gain modes. In an example embodiment, the plurality of conversion gain modes may include the HCG mode and the LCG mode. The conversion gain transistor CGT may be maintained in a turn-off state in HCG mode and in a turn-on state in the LCG mode. Therefore, in the HCG mode, the second node N2 may be separated from the floating diffusion region FD, thereby improving the image quality generated from the image sensor 100.

In another example embodiment, the operation of the pixel PXg may include the HCG mode, the MCG mode, and the LCG mode. In this case, the pixel PXg may provide junction capacitance of the second node N2 to the floating diffusion region FD by turning on the conversion gain transistor CGT in the MCG mode. In addition, the pixel PXg may provide the junction capacitance of the second node N2 and the capacitance of the first capacitor CP1 to the floating diffusion region FD by turning on the conversion gain transistor CGT and the first transistor T1 in the LCG mode. Therefore, because the second node N2 and the floating diffusion region FD may be separated by the conversion gain transistor CGT, image quality may be improved in the HCG mode and a greater number of conversion gain modes may be provided.

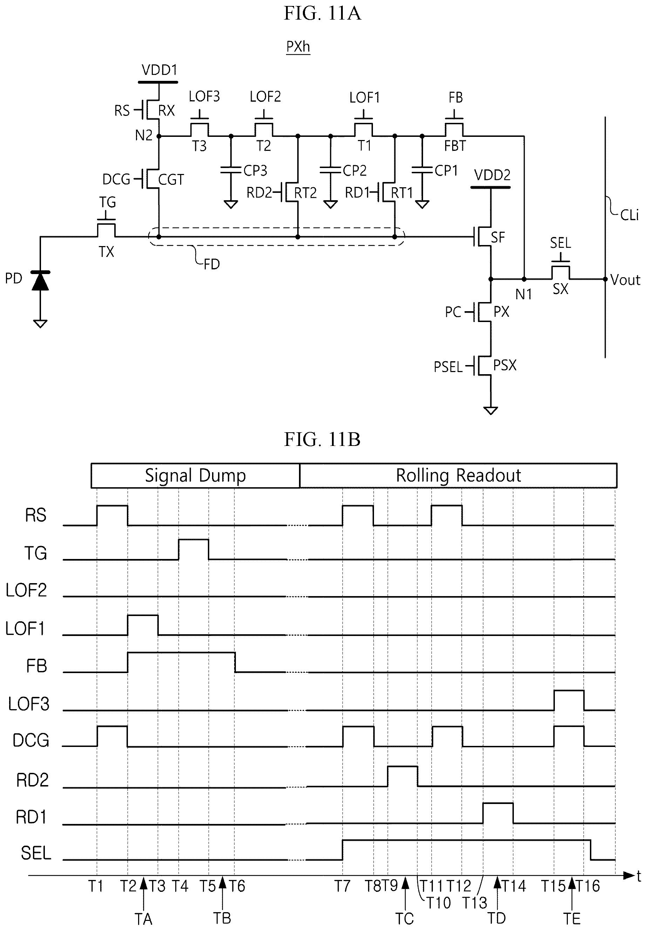

FIG. 11A is a circuit diagram of a pixel of an image sensor according to an example embodiment. The pixel PXh of FIG. 11A may correspond to the pixel PX of the image sensor 100 of FIG. 1. Referring to FIGS. 3A to 10C, detailed descriptions for overlapping or similar parts will be omitted.

Referring to FIG. 11A, the pixel PXh according to an example embodiment, unlike the pixel PXc described with reference to FIG. 6A, may include a photodiode PD and a transfer transistor TX.

In the pixel PXh according to example embodiments, when the image sensor 100 operates in the global shutter mode, the overflowed charge from the photodiode PD at the integration time may cross a potential barrier of the conversion gain transistor CGT and be stored in the third capacitor CP3 configured as the lateral overflow integration capacitor (LOFIC). In this case, the reset control signal RS may have the low-level and the reset transistor RX may be turned off. The third transistor T3 may be turned on and may electrically connect the second node N2 and the third capacitor CP3. The pixel PXh may readout a voltage corresponding to the overflowed photocharge stored in the third capacitor CP3 separately from a voltage corresponding to the photocharge stored in the first capacitor CP1. That is, the pixel PXh can generate an image signal based on the overflowed charge from the photodiode PD in response to a high illumination environment even in the global shutter mode of the image sensor 100.

The pixel PXh may perform the signal-dump operation in the global shutter mode of the image sensor 100. The pixel voltage of the floating diffusion region FD may be amplified by the source follower transistor SF and stored in the first capacitor CP1, and the reset voltage of the floating diffusion region FD may be amplified by the source follower transistor SF and stored in the second capacitor CP2. Alternatively, the reset voltage may be stored in the first capacitor CP1 and the pixel voltage may be stored in the second capacitor CP2. In this case, the selection transistor SX may be turned off.

In addition, in the readout operation of the global shutter mode, the pixel PXh may reduce deterioration of image quality because the photocharges corresponding to the pixel voltage and/or the reset voltage stored in each of the first capacitor CP1 and/or the second capacitor CP2 may move to the floating diffusion region FD through one of the read transistors RT1 and RT2. In addition, in the HCG mode of the rolling shutter mode, the pixel PXh can improve the image quality generated from the image sensor 100 because the second node N2 may be separated from the floating diffusion region FD.

In an example embodiment, the third transistor T3 may be omitted, and the second node N2 and the third capacitor CP3 may be separated from each other.

In an example embodiment, the dual conversion gain transistor DCG may be omitted, and the second node N2 and the floating diffusion region FD may be directly connected. In this case, it may operate similarly to example of FIG. 3A.

In an example embodiment, the pixel PXh may include an additional capacitor connected in parallel with the first to third capacitors CP1 to CP3, which may be used to support an autofocusing operation. In this case, the photodiode may be configured as two dual photodiodes and may operate similarly to the pixel (PXc) in FIG. 6A.

FIG. 11B is a timing diagram explaining the operation of the pixel PXh in the global shutter mode. The operation of the pixel PXh described with reference to FIG. 11B will be described assuming that the pixel voltage is stored in the first capacitor CP1, the reset voltage is stored in the second capacitor CP2, and the overflowed charge from the photodiode is stored in third capacitor CP3.

In the signal-dump operation, the read transistors RT1 and RT2, the second transistor T2, and the third transistor T3 may be maintained in a turn-off state by the low-level read control signals RD1 and RD2, the second control signal LOF2 and the third control signal LOF3.

At time T1, the reset transistor RX and the conversion gain transistor CGT may be turned on by the high-level reset control signal RS and the conversion gain control signal DCG, and the floating diffusion region FD may be reset.

At time T2, the source follower transistor SF may output the reset voltage to the first node N1 corresponding to the voltage of the floating diffusion region FD. The feedback transistor FBT and the first transistor T1 may be turned on by the high-level feedback control signal FB and the first control signal LOF1. At time TA, the reset voltage of the first node N1 may be stored in the second capacitor CP2.

At time T3, the first transistor T1 may be turned off by the first control signal LOF1, and at time T4, the pixel voltage corresponding to the photocharge generated from the photodiode PD may be output to the first node N1 by turning on the transfer transistor TX. At time TB, the pixel voltage of the first node N1 corresponding to the photocharge generated from the photodiode PD may be stored in the first capacitor CP1.

For the rolling readout operation, at time T7, the reset control signal RS and the conversion gain control signal DCG may transition to the high-level, the reset transistor RX, the conversion gain transistor CGT may be turned on, and the floating diffusion region FD may be precharged. The selection control signal SEL may be maintained at the high-level during the rolling readout operation of the pixel voltage and the reset voltage, and the selection transistor SX may be maintained in a turn-on state.

At time T8, the reset transistor RX and the conversion gain transistor CGT may be turned off, and at time T9, the second read control signal RD2 may transition to the high-level and the second read transistor RT2 may be turned on. The charge stored in the second capacitor CP2 may move to the floating diffusion region FD through the second read transistor RT2. At time TC, the reset voltage of the floating diffusion region FD may be amplified by the source follower transistor SF and output to the column line CLi through the selection transistor SX.

At time T10, the second read transistor RT2 may be turned off by the low-level second read control signal (RD2), and at time T11, the reset control signal RS and conversion gain control signal DCG may transition to the high-level, the reset transistor RX and conversion gain transistor CGT may be turned on, and the floating diffusion region FD may be precharged again. At time T12, the reset transistor RX and the conversion gain transistor CGT may be turned off, and at time T13, the first read control signal RD1 may transition to the high-level and the first read transistor RT1 may be turned on. The charge stored in the first capacitor CP1 may move to the floating diffusion region FD through the first read transistor RT1. At time TD, the pixel voltage of the floating diffusion region FD may be amplified by the source follower transistor SF and output to the column line CLi through the selection transistor SX.

At time T14, the first read transistor (RT1) may be turned off, and at time T15, the third control signal LOF3 and the conversion gain control signal DCG may transition to the high-level, and the third transistor T3 and the conversion gain transistor CGT may be turned on. The overflowed charge stored in the third capacitor CP3 may move to the floating diffusion region FD through the third transistor T3 and the conversion gain transistor CGT. At time TE, the voltage of the floating diffusion region FD may be amplified by the source follower transistor SF and output to the column line CLi through the selection transistor SX.

In the pixel PXh according to example embodiments, the voltage of the floating diffusion region FD output at time TE may be the sum of the voltage corresponding to the overflowed charge stored in the third capacitor CP3 and the pixel voltage of the photodiode PD. That is, before the overflowed charge stored in the third capacitor CP3 moves to the floating diffusion region FD, the floating diffusion region FD may not be precharged. In an example embodiment, each of the signal output to the column line CLi at time TD and the signal output to the column line CLi at time TE may be converted into a digital pixel signal based on the reset voltage, and a signal processing circuit outside the pixel may determine one of the digital pixel signals as a final pixel signal. Therefore, the pixel PXh may generate an unsaturated image even at high illumination.

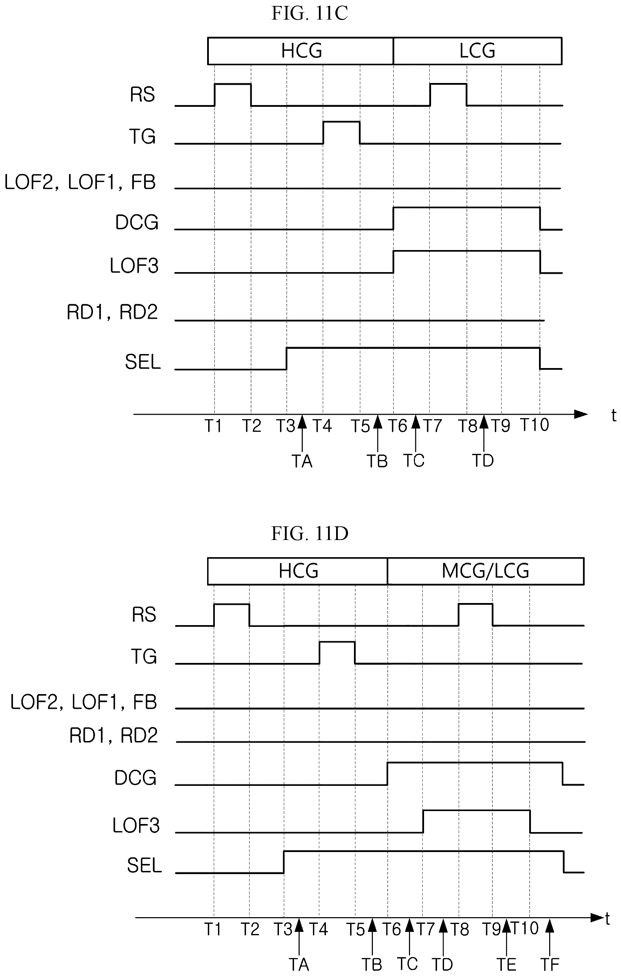

FIG. 11C is a timing diagram explaining the operation of the pixel PXh in the rolling shutter mode according to an example embodiment. Focus will be on describing parts that are different from the operation of the pixel PXc described with reference to FIG. 6C.

The operation of the pixel PXh described with reference to FIG. 11C may provide a plurality of conversion gain modes. In an example embodiment, the plurality of conversion gain modes may include the HCG mode and the LCG mode.

The pixel PXh may operate in the same manner as the operation in the rolling shutter mode of the pixel PXc described with reference to FIG. 6C. However, unlike FIG. 6C, there may be only one transfer transistor control signal TG.

FIG. 11D is a timing diagram explaining the operation of the pixel PXh in the rolling shutter mode according to an example embodiment. Focus will be on describing parts that are different from the operation of the pixel PXc described with reference to FIG. 6D.

The operation of the pixel PXh described with reference to FIG. 11D may provide a plurality of conversion gain modes. In an example embodiment, the plurality of conversion modes may include HCG mode, MCG mode, and LCG mode.

The pixel PXh may operate in the same manner as the operation in the rolling shutter mode of the pixel PXc described with reference to FIG. 6D. However, unlike FIG. 6D, there may be only one transfer transistor control signal TG.

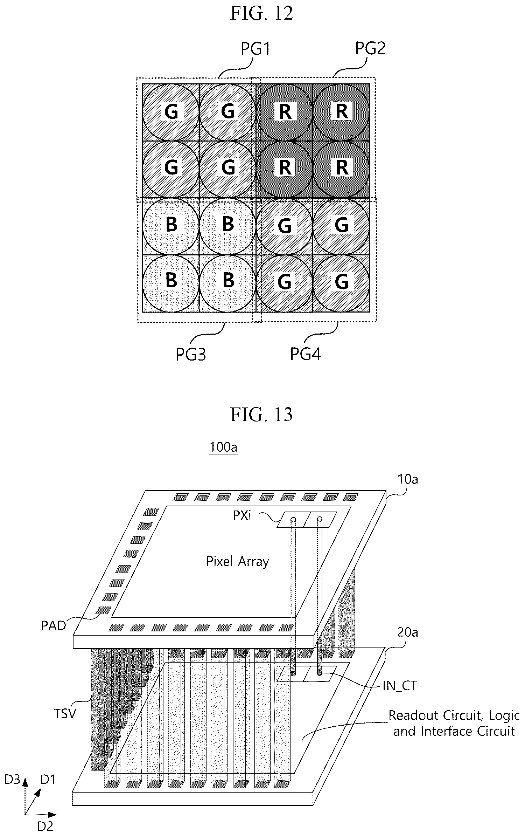

FIG. 12 is a diagram explaining a pixel group of a pixel array according to an example embodiment. The pixel group described with reference to FIG. 12 may correspond to a part of the pixel array 110 of the image sensor 100 of FIG. 1. The pixel in FIG. 12 may correspond to any one of the pixels of example embodiments described with reference to FIGS. 1 to 11D. The pixel array 110 will be described with reference to FIGS. 1 and 12.

In an example embodiment, the pixels with the same color filter may be consecutively arranged in the pixel array 110. The pixels including the same color filter may be referred to as a pixel group. FIG. 12 illustrates an example embodiment in which the pixel array 110 has a tetracell structure and four pixels with the same color filter configure a pixel group. In this case, a first pixel group PG1 and a fourth pixel group PG4 may each include a green color filter, a second pixel group PG2 may include a red color filter, and a third pixel group PG3 may include a blue color filter. That is, the pixel groups PG1, PG2, PG3, and PG4 may be arranged in a bayer pattern. In the pixel array 110, the pixel groups PG1, PG2, PG3, and PG4 as shown in FIG. 12 may be repeatedly arranged.

The image sensor 100 including the pixel array 110 of FIG. 12 may operate in a tetra mode or a normal mode. When an external environment has low illumination, the image sensor 100 may operate in the tetra mode. When the external environment has normal illumination, the image sensor 100 may operate in the normal mode.

In the normal mode, the pixel array 110 may output an analog signal from each of the pixels included in the pixel groups PG1, PG2, PG3, and PG4.

In the tetra mode, the pixel array 110 may output an analog signal from each pixel group PG1, PG2, PG3, and PG4 instead of outputting an analog signal from each pixel. That is, the pixel array 110 may operate on a pixel group basis. For example, the pixels included in the same pixel group may be controlled identically, and a binning may be applied for signals output from the pixels included in the same pixel group.

In an example embodiment, the pixel group may include the pixels in the form of M*N (M and N are integers greater than or equal to 2). The M*N form may be a form having M pixel lines arranged in a vertical direction. Each of the M pixel lines may include N pixels arranged consecutively in a horizontal direction. Referring to FIG. 12, the M and N are assumed to be 2, but example embodiments are not limited thereto, and the M and N may be 3 or a bigger number. In addition, the M and N may be different integers.

FIG. 13 is a block diagram of an image sensor 100a according to an example embodiment. Detailed descriptions for overlapping parts with those described above will be omitted.

The image sensor 100a may include a stacked first substrate 10a and second substrate 20a.

For example, the first substrate 10a may be stacked on the second substrate 20a in a direction D3 perpendicular to a plane of the substrate (a surface parallel to D1 and D2). The first substrate 10a and the second substrate 20a may be electrically connected. For example, the first substrate 10a and the second substrate 20a may transmit a pixel signal or a control signal through a through silicon via (TSV) between pads located in a peripheral area of the substrate. The first substrate 10a and the second substrate 20a may also be electrically connected through an in-pixel contact (IN_CT) inside a pixel (PXi). The in-pixel contact may be, for example, a Cu-to-Cu (C2C) bonding contact. The pixel signal (or pixel data) of the first substrate 10a may be transmitted to a readout circuit (or an image signal processing logic) of the second substrate 20a.

The second substrate 20a may include the readout circuit, a timing controller, and a logic such as the image signal processing logic, and an interface circuit. The readout circuit may include an ADC.

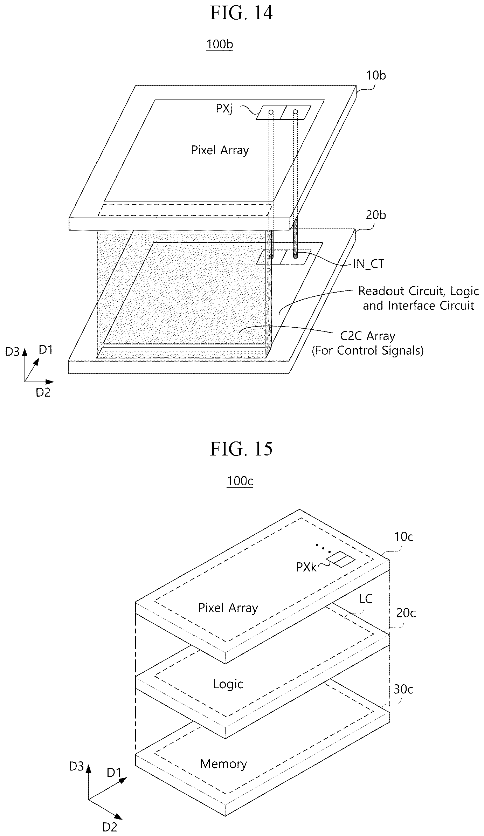

FIG. 14 is a block diagram of an image sensor 100b according to an example embodiment. Detailed descriptions for overlapping parts with those described above will be omitted.

The image sensor 100b may include a stacked first substrate 10b and second substrate 20b. The first substrate 10b and the second substrate 20b may be connected to each other through a wafer bonding process using a pixel-level C2C interconnection. The first substrate 10b and the second substrate 20b may be electrically connected not only through an in-pixel contact inside a pixel PXj, but also through a Cu-to-Cu (C2C) array located in a peripheral area of the substrate. Control signals for controlling a pixel circuit may be transmitted through the C2C array. The pixel signal (or pixel data) of the first substrate 10b may be transmitted to the readout circuit (or the image signal processing logic) of the second substrate 20b through the in-pixel contact.

FIG. 15 is a block diagram of an image sensor 100c according to an example embodiment. Detailed descriptions for overlapping parts with those described above will be omitted.

Referring to FIG. 15, an image sensor 100c may further include a third substrate 30c in addition to a first substrate 10c and a second substrate 20c. The third substrate 30c, the second substrate 20c, and the first substrate 10c may be sequentially stacked in a direction D3 perpendicular to a plane of the substrate (a surface parallel to D1 and D2). The third substrate 30c may include a memory device. For example, the third substrate 30c may include a volatile memory device such as DRAM, SRAM, etc. The third substrate 30c may receive signals from the first substrate 10c and the second substrate 20c and process the signals through the memory device.

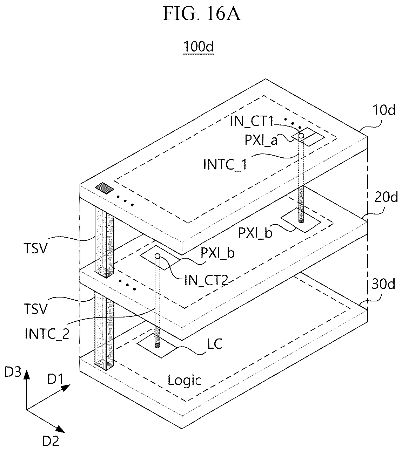

FIG. 16A is a block diagram of an image sensor 100d according to an example embodiment. Detailed descriptions for overlapping parts with those described above will be omitted.

Referring to FIG. 16A, an image sensor 100d may include a first substrate 10d, a second substrate 20d, and a third substrate 30d. The third substrate 30d, the second substrate 20d, and the first substrate 10d may be sequentially stacked in a direction D3 perpendicular to a plane of the substrate (a surface parallel to D1 and D2).

In an example embodiment, some parts of the pixel circuits PXl_a and PXl_b may be provided on each of the first substrate 10d and the second substrate 20d. A first partial circuit PXl_a of the pixel may be located on the first substrate 10d, and a remaining second partial circuit PXl_b of the pixel may be located on the second substrate 20d. The third substrate 30d may include a readout circuit, a timing controller, and a logic such as an image signal processing logic, and an interface circuit. The readout circuit may include an ADC.

For example, in the pixels PXa to PXh according to example embodiments of FIGS. 1 to 11, the photodiode may be located on the first substrate 10d, and the remaining pixel circuits may be located on the second substrate 20d.

Alternatively, in the pixels PXa to PXh, the photodiode, the transfer transistor, the reset transistor, the source follower transistor, and the selection transistor may be located on the first substrate 10d, and, depending on example embodiments, the dual conversion gain transistor, the capacitors, the transistors connected to the capacitors, and the feedback transistor may be located on the second substrate 20d.

Alternatively, in the pixels PXa to PXh, the photodiode, the transfer transistor, the reset transistor, the dual conversion gain transistor, the capacitors, and transistors connected to the capacitors may be located on the first substrate 10d, and the remaining circuits may be located on the second substrate 20d.

Forms which the circuits configuring the pixels PXa to PXh are disposed on the first substrate 10d and the second substrate 20d are not limited thereto.

The first substrate 10d and the second substrate 20d may be electrically connected to each other.

In an example embodiment, the first substrate 10d and the second substrate 20d may transmit a pixel signal or a control signal through a through silicon via (TSV) located in a peripheral area of the substrate.

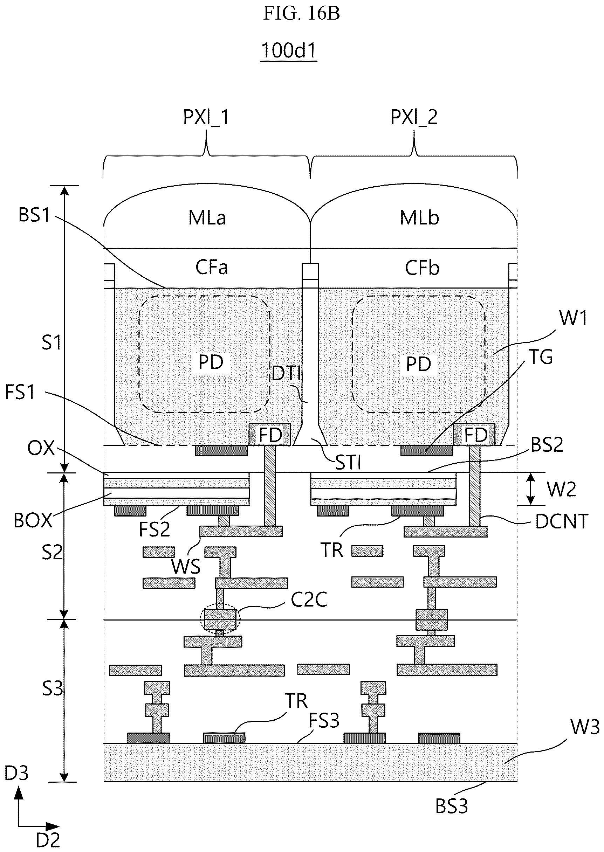

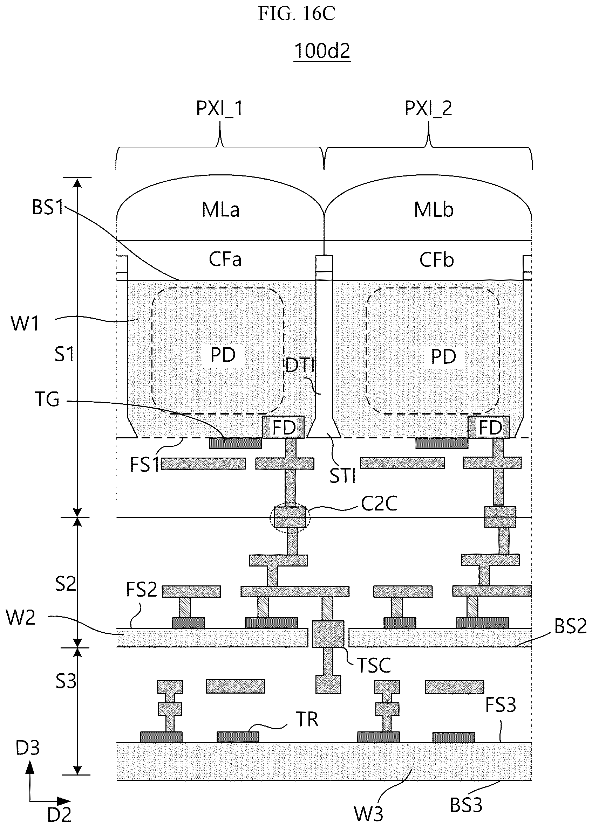

In an example embodiment, the first partial circuit PXl_a of the pixel of the first substrate 10d and the second partial circuit PXl_b of the pixel of the second substrate 20d may also be electrically connected through a first inter-substrate connection structure INTC1. The inter-substrate connection structure INTC1 may be a Cu-to-Cu (C2C) bonding contact or a deep-contact structure. The deep-contact structure may include the through silicon via. This will be described below with reference to FIGS. 16B and 16C. The inter-substrate connection structure INTC1 may be electrically connected an in-pixel contact IN_CT1 electrically connected to an element of the first partial circuit PXl_a of the pixel and an in-pixel contact IN_CT2 electrically connected to an element of the second partial circuit PXl_b of the pixel to each other.

In an example embodiment, the first substrate 10d and/or the second substrate 20d may be electrically connected to the third substrate 30d through the through silicon via (TSV) and/or a second inter-substrate connection structure INTC2. Signals from the first substrate 10d and/or the second substrate 20d may be transmitted to the readout circuit (or the image signal processing logic) on the third substrate 30d through the through silicon via (TSV) and/or the second inter-substrate connection structure INTC2.

In an example embodiment, the second partial circuit PXl_b of the pixel may be electrically connected to circuits of the third substrate 30d through the Cu-to-Cu (C2C) bonding contact. The second inter-substrate connection structure INTC2 may include the Cu-to-Cu (C2C) bonding contact.

In an example embodiment, the second partial circuit PXl_b of the pixel may be electrically connected to the circuits of the third substrate 30d through a thru-silicon copper (TSC).

FIGS. 16B is a cross-sectional view of the image sensor 100d of FIG. 16A according to an example embodiment. Detailed descriptions for overlapping parts with those described above will be omitted.

Referring to FIG. 16B, an image sensor 100d1 may include a first structure S1, a second structure S2, and a third structure S3.

In an example embodiment, the first structure S1 may include a photodiode PD, a transfer gate TG, and a floating diffusion region FD.

In an example embodiment, pixel circuits of each of pixels PXl_1 and PXl_2 may be located in the second structure S2. Alternatively, in an example embodiment, some parts of the pixel circuits of each of the pixels PXl_1 and PXl_2 may be located in the first structure S1, and the other parts may be located in the second structure S2. That is, FIG. 16B exemplarily shows that a floating diffusion region FD of the first structure S1 is directly connected to a transistor TR of the second structure S2. However, unlike FIG. 16B, the floating diffusion region FD of the first structure S1 may be electrically connected to the transistor TR of the second structure S2 through another pixel circuit of the first structure S1.

In an example embodiment, the third structure S3 may include a readout circuit, a timing controller, and a logic such as an image signal processing logic, and an interface circuit.

In an example embodiment, the first structure S1, the second structure S2, and the third structure S3 may include a wiring layer WS for transmitting electrical signals.

In an example embodiment, the first structure S1 may include a first surface FS1 and a second surface BS1 facing each other. The first surface FS1 may be a front surface of the first structure S1, and the second surface BS1 may be a rear surface of the first structure S1. For example, the image sensor 100d1 may be a backside illumination type BSI image sensor in which light is incident on the rear surface of the first structure S1.

In an example embodiment, each of the pixels Pxl_1 and PXl_2 located in the first structure S1 may include photodiodes PD, color filters CFa and CFb, and microlenses MLa and MLb. FIG. 16B shows that each of the pixels Pxl_1 and Pxl_2 may include different microlenses MLa and MLb, but alternatively, a plurality of pixels of the image sensor 100d1 may share one microlens. Alternatively, a plurality of photodiodes may share one microlens. That is, one microlens may extend across a plurality of pixels or a plurality of photodiodes. For example, the pixel of the image sensor 100d1 may be a dual photodiode pixel in which a plurality of photodiodes in one pixel may share one microlens. Alternatively, the pixel of the image sensor 100d1 may be a super pixel in which a plurality of pixels may share one microlens.

In an example embodiment, a plurality of pixel separators DTI extending from the second surface BS1 toward the first surface FS1 may be provided between the first surface FS1 and the second surface BS1 of a first substrate W1 of the first structure S1. The pixels Pxl_1 and PXl_2 may be isolated from each other using the pixel separator DTI.

In an example embodiment, the first structure S1 may include an element separating portion STI.

In an example embodiment, the element separating portion STI may extend from the first surface FS1 toward the second surface BS1 of the first substrate W1 with a predetermined depth and may include an insulating material. In this case, the element separating portion STI may be connected to the pixel separator DTI, and a boundary between the element separating portion STI and the pixel separator DTI may be unclear.

In an example embodiment, the element separating portion STI may be formed as a doped area with a predetermined depth from the first surface FS1 toward the second surface BS1 of the first substrate W1. The doped area may be doped with a P-type material.

In an example embodiment, the second structure S2 may include a second substrate W2.

In an example embodiment, the second substrate W2 may be a silicon on insulator (SOI) substrate. In this case, after the SOI substrate is bonded to the first structure S1, a part of the SOI substrate may be separated by a grinding, a polishing, or an ion-cutting. In this case, the second substrate S2 may include an oxide layer (OX) and a buried oxide (BOX) layer. The second substrate W2 may be referred to as an active layer.

In an example embodiment, unlike the example shown in FIG. 16B, the second substrate W2 may not include the buried oxide (BOX) layer. That is, the second substrate W2 may be a general semiconductor substrate rather than the SOI substrate.

In an example embodiment, the first structure S1 and the second structure S2 may be electrically connected to each other through a deep-contact structure DCNT. The deep-contact structure DCNT may be a contact crossing at least a part of the first structure S1 and at least a part of the second structure S2. The deep-contact structure DCNT may be formed after bonding the first structure S1 and the second structure S2. In an example embodiment, the deep-contact structure DCNT may include an electrical connection path formed of tungsten.

Alternatively, in an example embodiment, the first structure S1 and the second structure S2 may be electrically connected to each other through a through silicon via.

Alternatively, in an example embodiment, the first structure S1 and the second structure S2 may be electrically connected to each other through a Cu-to-Cu (C2C) bonding contact.

Alternatively, in an example embodiment, the first structure S1 and the second structure S2 may be electrically connected to each other through all of the Cu-to-Cu (C2C) bonding contact, the deep-contact structure DCNT, and the through silicon via.

In an example embodiment, the second structure S2 and the third structure S3 may be electrically connected through the Cu-to-Cu (C2C) bonding contact. Alternatively, the second structure S2 and the third structure S3 may be electrically connected to each other through the through silicon via and/or the TSC.

In an example embodiment, the first surface FS1 of the first substrate W1 and a third surface BS2 of the second substrate W2 may face each other, and a fourth surface FS2 of the second substrate W2 and a fifth surface FS3 of the third substrate W3 may face each other.

FIGS. 16C is a cross-sectional view of the image sensor 100d of FIG. 16A according to an example embodiment. Detailed descriptions for overlapping or similar parts with description referring to the image sensor 100d1 in FIG. 16B will be omitted.

Referring to FIG. 16C, an image sensor 100d2 may include the first structure S1, the second structure S2, and the third structure S3.

In an example embodiment, each of the first structure S1, the second structure S2, and the third structure S3 may include the substrates W1, W2, and W3.

In an example embodiment, the first structure S1 and the second structure S2 may be electrically connected to each other through the Cu-to-Cu (C2C) bonding contact. Alternatively, the first structure S1 and the second structure S2 may be electrically connected to each other through the through silicon via. Alternatively, the first structure S1 and the second structure S2 may be electrically connected to each other through both the Cu-to-Cu (C2C) bonding contact and the through silicon via.

In an example embodiment, the second structure S2 and the third structure S3 may be electrically connected through the TSC and/or the Cu-to-Cu (C2C) bonding contact. The TSC may include the Cu-to-Cu (C2C) bonding contact formed passing through the second substrate W2. Alternatively, the second structure S2 and the third structure S3 may be electrically connected to each other through the through silicon via and/or the Cu-to-Cu (C2C) bonding contact.

In an example embodiment, the first surface FS1 of the first substrate W1 and the fourth surface FS2 of the second substrate W2 may face each other, and the third surface BS2 of the second substrate W2 and the fifth surface FS3 of the third substrate W3 may face each other.

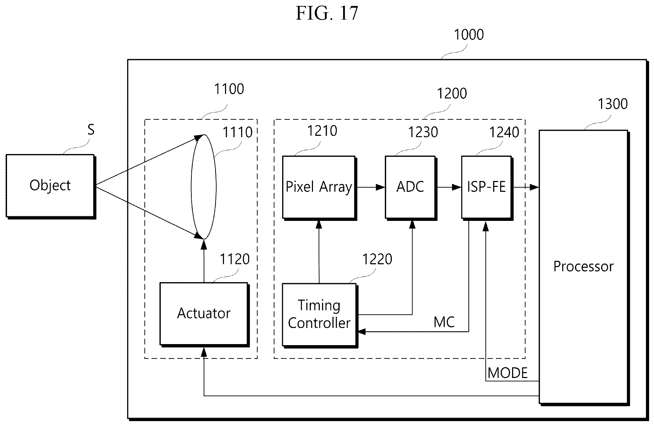

FIG. 17 is a block diagram of an electronic device according to an example embodiment. Detailed descriptions for overlapping parts with those described above will be omitted.

An electronic device 1000 may include an imaging device 1100, an image sensor 1200, and a processor 1300. The electronic device 1000 may perform an autofocusing based on phase data provided from the image sensor 1200 to the processor 1300. The phase data may be generated from an image signal processor 1240 based on the pixel voltages of the pixels PXc, PXf, and PXg described with reference to FIGS. 6A, 9A, and 10A.

The processor 1300 may control overall operations of the electronic device 1000. The processor 1300 may control a location of a lens 1110 by providing a control signal to a lens driving device 1120. As a result, a focal distance may be controlled.

The imaging device 1100 is a component that receives light and may include the lens 1110 and the lens driving device 1120. The lens 1110 may include a plurality of lenses.

The lens driving device 1120 may move the lens 1110 in a direction in which a distance from the object S increases or decreases based on the control signal from the processor 1300.

The image sensor 1200 may generate image data and phase data based on incident light. The image sensor 1200 may include a pixel array 1210, a timing controller 1220, an ADC 1230, and the image signal processor 1240.

The pixels of a pixel array 1210 may include at least one photoelectric conversion element.

The pixels of the pixel array 1210 according to an example embodiment may operate in a global shutter mode or a rolling shutter mode. The image signal processor 1240 may generate a mode control signal MC based on a shooting mode signal MODE transmitted by the processor 1300. The pixels may operate in either the global shutter mode or the rolling shutter mode based on the mode control signal (MC) transmitted by the image signal processor 1240.

The processor 1300 may perform a disparity operation using the phase data. The processor 1300 may provide the control signal based on the disparity operation result to the lens driving device 1120 to move the location of the lens 1110.

The processor 1300 may provide an operation mode control signal INFO_MD to the timing controller 1220. The timing controller 1220 may control the operation of the pixel array 1210 based on the operation mode control signal INFO_MD.

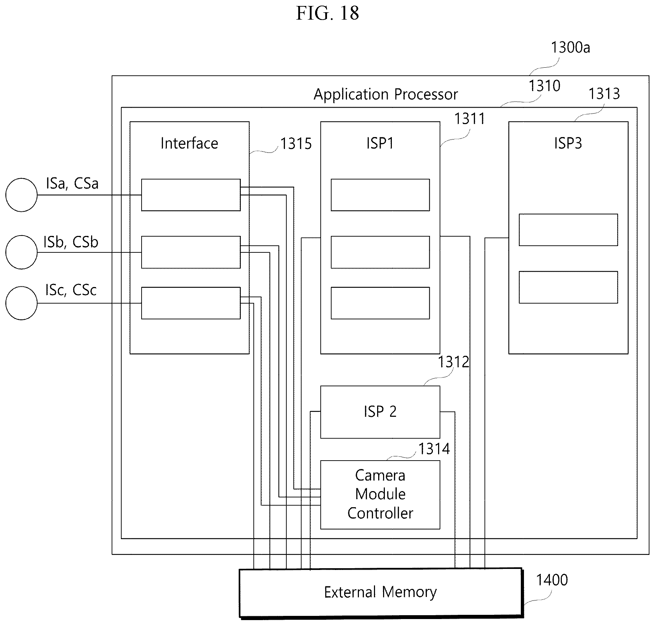

FIG. 18 is a block diagram of an application processor 1300a according to an example embodiment. Detailed descriptions for overlapping parts with those described above will be omitted.

The application processor 1300a may include an image signal processing device 1310. The image signal processing device 1310 may include a plurality of image signal processors ISP1, ISP2, and ISP3, a camera module controller 1314, and a camera interface 1315.

The camera module controller 1314 may transmit control signals CSa, CSb, and CSc to a plurality of camera modules. FIG. 18 shows control signals CSa, CSb, and CSc being transmitted to three camera modules, but example embodiments are not limited thereto. Depending on example embodiments, the camera module controller 1314 may transmit the control signals to two camera modules or transmit the control signals to four or more camera modules.

The camera module controller 1314 according to example embodiments may transmit the control signals CSa, CSb, and CSc to operate at least one of the plurality of camera modules in the global shutter mode.

Image signals ISa, ISb, and ISc may be stored in an external memory 1400 through a camera interface 1315 from a plurality of cameras. The image signal processors ISP1 and ISP2 may process the image signals ISa, ISb, and ISc stored in the external memory 1400 to display them on a display or perform an autofocusing. The image signals ISa, ISb, and ISc may include the image data and the phase data. The image signals ISa, ISb, and ISc stored in the external memory 1400 may be encoded image signals. The image signal processors ISP1 and ISP2 may readout and decode the encoded image signal from the external memory 1400 and may display image data generated based on the decoded image signal.

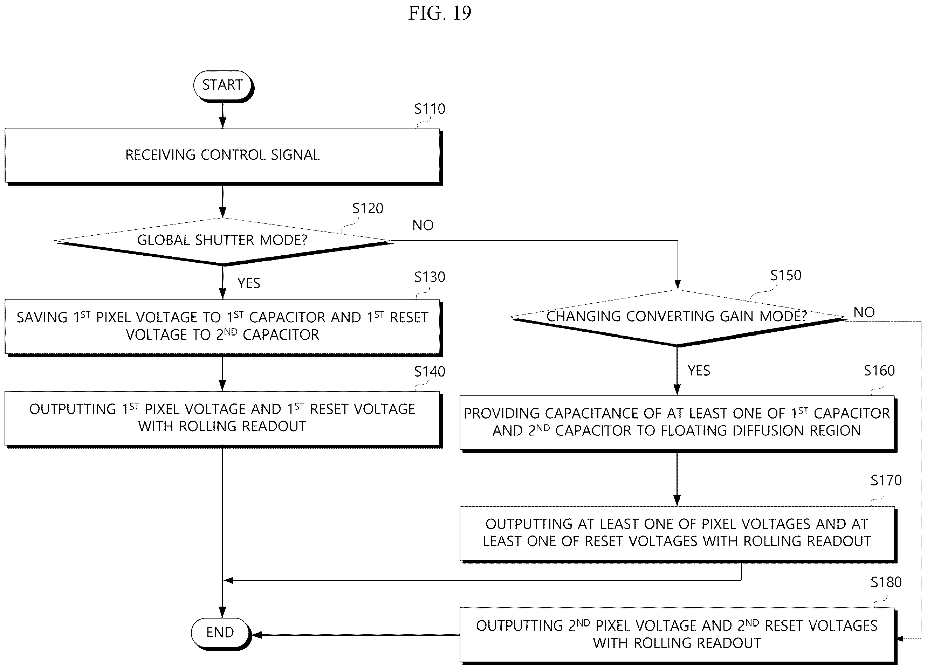

FIG. 19 shows a method of operating an image sensor according to an example embodiment. An image sensor may be the image sensor 100 of FIG. 1.

The image sensor 100 may receive a control signal in operation S110. The control signal may be provided from an image processing processor or an electronic device. The control signal may be a signal that directs image capturing in the global shutter mode or a signal that directs image capturing in the rolling shutter mode.

In operation S120, when the control signal directs the global shutter mode, operation S130 may be performed, and when the control signal directs the rolling shutter mode, operation S150 may be performed.

In operation S130, the image sensor 100 may perform a signal-dumping operation of a reset voltage and a pixel voltage. The pixel of the image sensor 100 may be any one of FIGS. 3A, 4A, 5A, 6A, 7A, 8A, 9A, and 10A. The signal-dumping operation may be performed by storing a first pixel voltage output by a source follower transistor corresponding to photocharge generated from a photodiode included in each of a plurality of pixels exposed to light in the same time section in a first capacitor, and by storing a first reset voltage of a floating diffusion region output by the source follower transistor in a second capacitor. The signal-dumping operation may operate in correspondence with the timings of FIGS. 3D, 4B, 5B, 6B, 7B, 8B, 9B, and 10B.

In operation S140, the image sensor 100 may output the output of the source follower transistor to a column line corresponding to the first pixel voltage stored in the first capacitor and the first reset voltage stored in the second capacitor in a rolling readout operation. The rolling readout operation may operate in correspondence with the timings of FIGS 3D, 4B, 5B, 6B, 7B, 8B, 9B, and 10B.

In operation S150, the image sensor 100 may perform operation S160 when the control signal directs capturing in a plurality of conversion gain modes of the rolling shutter mode, and may perform operation S180 when the control signal directs capturing in a single conversion gain mode of the rolling shutter mode.

In operation S160, the image sensor 100 may selectively provide capacitance of at least one of the first capacitor and the second capacitor to the floating diffusion region.

In operation S170, the image sensor 100 may output the reset voltage and the pixel voltage in the rolling readout method by electrically separating or coupling the floating diffusion region with at least one of the first capacitor and the second capacitor.

In operation S180, the image sensor 100 may output the reset voltage and the pixel voltage in the rolling readout method while the coupling or separating of the floating diffusion region with the first and second capacitors is fixed. That is, the reset voltage and pixel voltage may be output in the rolling readout method in one conversion gain mode.

An image sensor can selectively operate in either a global shutter method or a rolling shutter method.

The image sensor can operate in either the global shutter method or the rolling shutter method with a simple structure using a small number of transistors.

The image sensor can generate images with less deterioration in both the global shutter method and the rolling shutter method.

## Claims

1. An image sensor (100) comprising:
a row driver (120);
at least one photodiode (PD);
a floating diffusion region (FD) configured to accumulate photocharges generated from the at least one photodiode (PD) through a transfer transistor (TX);
a reset transistor (RX) configured to provide a voltage of a pixel power terminal to the floating diffusion region (FD) according to a reset control signal (RS);
a source follower transistor (SF) configured to output an amplified voltage of the floating diffusion region (FD) to a first node (N1) based on a voltage of the floating diffusion region (FD);
a selection transistor (SX) configured to connect the first node (N1) and an output line (CLi) electrically;
a second node (N2) configured to be electrically connected to the reset transistor (RX);
a first capacitor (CP1) and a second capacitor (CP2) electrically connected to a path connecting the first node (N1) and the second node (N2); and
a plurality of transistors (T1, T2), between the first node (N1) and the second node (N2), connected to the first capacitor (CP1) and the second capacitor (CP2), respectively,
wherein the row driver (120) is configured to, in a signal-dump operation of a global shutter mode, control the plurality of transistors (T1, T2) to store to store a pixel voltage corresponding to the first node (N1) in the first capacitor (CP1), and to store a reset voltage corresponding to the first node (N1) in the second capacitor (CP2),
wherein at least one of the first capacitor (CP1) and the second capacitor (CP2) is configured to be a lateral overflow integration capacitor, LOFIC, and,
wherein, in a rolling shutter mode, at least one of the first capacitor (CP1) and the second capacitor (CP2) is configured to store overflowed charge from the at least one photodiode (PD).

2. The image sensor (100) of claim 1, wherein the row driver (120) is configured to, in a readout operation of the global shutter mode, control the plurality of transistors (T1, T2) to transmit the reset voltage stored in the second capacitor (CP2) to the floating diffusion region (FD) through the second node (N2).

3. The image sensor (100) of claim 1 or 2, wherein the second node (N2) is configured to have an equipotential with the floating diffusion region (FD).

4. The image sensor (100) of any one of claims 1 to 3, further comprising a converting gain transistor configured to connect the second node (N2) and the floating diffusion region (FD).

5. The image sensor (100) of any one of claims 1 to 4, wherein the row driver (120) is further configured to, in a readout operation of the rolling shutter mode, connect the second capacitor (CP2) electrically to the floating diffusion region (FD) to store the overflowed charge from the at least one photodiode (PD), and wherein the second capacitor (CP2) is configured to be a lateral overflow integration capacitor, LOFIC.

6. The image sensor (100) of any one of claims 1 to 5, wherein the source follower transistor (SF) is configured to, in each of the global shutter mode and the rolling shutter mode, amplify the reset voltage or the pixel voltage stored in the floating diffusion region (FD).

7. The image sensor (100) of any one of claims 1 to 6, further comprising:
a precharge transistor (PX) and a precharge selection transistor (PSX) connected in series between the first node (N1) and ground; and
a feedback transistor (FBT), a first transistor (T1), and a second transistor (T2) connected in series between the first node (N1) and the second node (N2),
wherein the first capacitor (CP1) is connected to the first node (N1) through the feedback transistor (FBT),
wherein the second capacitor (CP2) is connected to the first node (N1) through the feedback transistor (FBT) and the first transistor (T1), and
wherein the second transistor (T2) is configured to connect the second capacitor (CP2) and the second node (N2).

8. The image sensor (100) of claim 7, wherein the row driver (120) is further configured to:
in the rolling shutter mode, turn off the feedback transistor (FBT) and the first transistor (T1), and
in the global shutter mode, selectively turn off the feedback transistor (FBT) and the first transistor (T1).

9. The image sensor (100) of claim 7 or 8, wherein the row driver (120) is further configured to, in the signal-dump operation of the global shutter mode, store the reset voltage in the second capacitor (CP2) by turning on the feedback transistor (FBT) and the first transistor (T1), and turning off the second transistor (T2).

10. The image sensor (100) of claim 9, wherein the row driver (120) is further configured to, in the signal-dump operation of the global shutter mode, store the pixel voltage in the first capacitor (CP1) by turning on the feedback transistor (FBT) and turning off the first transistor (T1).

11. The image sensor (100) of any one of claims 1 to 6, comprising:
a precharge transistor (PX) and a precharge selection transistor (PSX) connected in series between the first node (N1) and ground;
a first feedback transistor (FBT1) and a second feedback transistor (FBT2) connected in parallel between the first node (N1) and the second node (N2);
a first transistor (T1) configured to connect the first capacitor (CP1) and the second node (N2); and
a second transistor (T2) configured to connect the second capacitor (CP2) and the second node (N2),
wherein the first capacitor (CP1) is connected to the first node (N1) through the first feedback transistor (FBT1), and
wherein the second capacitor (CP2) is connected to the first node (N1) through the second feedback transistor (FBT2).

12. The image sensor (100) of any one of claims 1 to 11, further comprising a converting gain transistor configured to connect the second node (N2) and the floating diffusion region (FD),
wherein the row driver (120) is further configured to, in a readout operation of the global shutter mode, before the reset voltage and the pixel voltage are transmitted to the floating diffusion region (FD), control the reset transistor (RX) and the converting gain transistor to precharge the floating diffusion region (FD).

13. The image sensor (100) of any one of claims 1 to 12, further comprising a third capacitor (CP3) connected between the path connecting the first node (N1) and the second node (N2), and ground,
wherein the at least one photodiode (PD) comprises a first photodiode (PD1) and a second photodiode (PD2), and
wherein the row driver (120) is further configured to, in the signal-dump operation of the global shutter mode, control the plurality of transistors (T1, T2) to store a first pixel voltage corresponding to photocharges generated from the first photodiode (PD1) in the first capacitor (CP1) and to store a second pixel voltage corresponding to photocharges generated from the second photodiode (PD2), or photocharges generated from both the first photodiode (PD1) and the second photodiode (PD2) in the third capacitor (CP3).

14. The image sensor (100) of claim 13, further comprising a read transistor (RT2) configured to connect the third capacitor (CP3) and the floating diffusion region (FD).

15. A method of operating an image sensor (100) including a plurality of pixels (PXs), each of the plurality of pixels (PXs) including a photodiode (PD) and a plurality of transistors (T1, T2), a row driver (120) configured to supply a control signal to the plurality of pixels (PXs), a timing controller (130) configured to control driving of the row driver (120), and a readout circuit configured to output an image signal of the plurality of pixels (PXs), the method comprising:
storing (S 130), according to a global shutter mode control signal, a first pixel voltage output by a source follower transistor (SF) corresponding to photocharges generated from the photodiode (PD) included in a first pixel of the plurality of pixels (PXs) commonly exposed to light during a time section, in a first capacitor (CP1), and storing a first reset voltage of a floating diffusion region (FD) output by the source follower transistor (SF) in a second capacitor (CP2);
outputting (S 140), according to the global shutter mode control signal, an output of the source follower transistor (SF), corresponding to the first pixel voltage stored in the first capacitor (CP1) and the first reset voltage stored in the second capacitor (CP2), to a column line in a rolling readout operation from the plurality of pixels (PXs);
outputting (S 180), according to a rolling shutter mode control signal, a second pixel voltage output by the source follower transistor (SF) corresponding to photocharges generated from the photodiode (PD) included in the first pixel and a second reset voltage of the floating diffusion region (FD) output by the source follower transistor (SF) to the column line in a rolling readout operation in which at least a part of the plurality of pixels (PXs) are exposed to light in different time sections; and
selectively providing (S 160), according to the rolling shutter mode control signal, capacitance of the first capacitor (CP1) or the second capacitor (CP2) in which overflowed charge from the photodiode (PD) is stored to the floating diffusion region (FD) in a lateral overflow integration method.
